# EUROPEAN PATENT APPLICATION

(11) **EP 4 678 965 A1**
(43) Date of publication of application: **14.01.2026**
(21) Application number: 25187062.2
(22) Date of filing: 02.07.2025
(51) Int. Cl.: F16M 11/10, F16M 11/16, F16M 11/22, F16M 13/02, B60K 35/50, B60K 35/60, B63B 49/00

(54) **HOVER MOUNT DISPLAYS, SYSTEMS, AND METHODS FOR WATERCRAFT**

(30) Priority: 08.07.2024 US 202418765903
(71) Applicant: Navico Group Americas LLC, Menomonee Falls, WI 53051 (US)
(72) Inventor: BAILEY, Paul Robert, 0930 Auckland (NZ)
(74) Representative: Grey, Ian Michael

(57) **Abstract**

A display system (200) is provided for use in a watercraft (100). The system comprises a display (202) having a screen with a front face. The display further includes a protective housing (206) comprising a first side **(206A)**, a second side **(206B)**, a third side **(206C)** opposite the second side, a fourth **(206D)** side opposite the first side, and a rear side **(206E)**. The screen is attached to the protective housing so that the rear side is positioned opposite the front face of the screen. An attachment feature (218) is positioned proximate to the rear side of the protective housing and is configured to attach the protective housing to a dash (212) of the watercraft. The attachment feature is located at a position centered between the second side and the third side of the protective housing and is positioned nearer to the fourth side than to the first side.

## Description

### FIELD

Embodiments relate generally to a hover mount display system that may be used for a watercraft.

### BACKGROUND

Mounting of displays has typically been done in the same manner in watercraft. Displays are typically attached to a dash with the displays embedded in the dash. To accommodate this approach, the dash must typically be made larger to create enough room for the display, with the dash being elevated to higher locations. The dash often obscures the vision of the user, preventing the user from seeing certain portions of the surrounding environment. The enlarged dashes also create poor aesthetics.

A hole often must be cut or otherwise formed in the dash to provide room for the display. The size of the hole may be made relatively small compared to the display so that the display fits tightly within the hole. However, this prevents the user from upgrading to a larger display unless substantial changes are made to the dash to increase the size of the hole. Alternatively, the size of the hole may be made large to allow for room for the user to upgrade to a larger display. However, this larger hole takes up a significant amount room on the dash, preventing other useful devices from being provided on the dash. Where a relatively small display is positioned in a relatively larger hole in a dash, this creates poor aesthetics for the display and also makes the display look smaller.

### BRIEF SUMMARY

In various embodiments described herein, displays may be attached to a dash of the watercraft in novel ways. An attachment feature may be utilized to attach the display to the dash, with the attachment feature attached at a rear side of the display. The attachment feature may be centered on the rear side of the display in some embodiments, but the attachment feature may instead be attached with a low central bias in positioning on the display. The use of the attachment feature and the low central bias may provide sellers with a greater opportunity to upsell larger displays and may help reduce the likelihood of any interference with other components such as the dash, the steering wheel, etc.

The attachment feature may be hollow and may have an internal cavity to allow cables to extend through the attachment feature. The attachment feature may also be attached to a display so that certain connectors (e.g., plug ins) are positioned in the internal cavity as well. The attachment feature may therefore conceal these cables and connectors to provide improved aesthetics for display assemblies. The attachment feature may also protect the cables and connectors from water, moisture, and other external material.

In some embodiments, display systems may be configured so that a display is attached to other components within a dash using only one connector. This single connector may be attached to another connector associated with components within the dash to simplify the mounting process. Where the display possesses several connectors that must be connected to other devices, this may make the mounting process significantly more difficult, with each of the connectors needing to be aligned appropriately. The presence of several connectors also increases the risk that one of these connectors is damaged when the display is mounted or unmounted.

The display system may be easy to install, with the display being attached to the dash from the front without requiring access to an area behind the dash for assembly. This may streamline the installation process relative to other dash mounted designs for watercraft. Cables may be allowed to extend through a hole in the dash and cable retention elements may hold the cables to prevent them from falling back into the dash.

The hover display concept provides various benefits. The hover display may help to reduce the size of the dash and to improve the appearance of the display by making the display less bulky. Instead of displays being embedded within a dash, a display may be provided without any connections at a top side, bottom side, and two lateral sides of the display. Instead, the display is merely attached at the rear side of the display. This may allow the display to have a sleeker design as users are no longer required to utilize bulky dashes or devote large space on dashes in order to obtain a larger display. Because the display may extend above a top surface of the dash, more space may be made available on the dash for other components and/or there may be more visual space for the user to view the surrounding environment. Having no connections at the sides may also allow displays having different sizes to be easily substituted in, providing sellers with an ability to upsell larger or higher quality displays. In some embodiments, the same attachment feature for display systems may be used regardless of the display size used, allowing new displays to be easily retrofitted without requiring additional holes to be formed in a dash and without requiring any other changes to a dash. The attachment feature may also improve the ease of maintenance and cleaning for displays as displays may be easily removed and then reattached after maintenance or cleaning is performed. The display itself may also be attached to the dash using an attachment feature so that the display is separated from the dash by some distance-by doing so, the display may be positioned closer to the user, making the display easier to see and improving ergonomics for the user.

The displays of display systems may be rotated in some embodiments so that the display is presented in either a vertical orientation or a horizontal orientation. Additionally, in some embodiments, displays may be rotated to adjust their vertical tilt angle, thereby allowing the orientation of the display to be adjusted based on the eye level of the user (e.g., within a seat or standing up).

In some embodiments, the display may have two attachment locations on its rear side where an attachment feature may be attached. Attaching the attachment feature at a first location may allow the display to be presented in a vertical orientation with the attachment feature having a low central bias, and attaching the attachment feature at a second location may allow the display to be presented in a horizontal orientation with the attachment feature still having a low central bias.

In an example embodiment, a display system for use in a watercraft is provided. The display system comprises a display and an attachment feature. The display comprises a screen having a front face and a protective housing. The protective housing comprises a first side, a second side, a third side opposite the second side, a fourth side opposite the first side, and a rear side. The screen is attached to the protective housing so that the rear side is positioned opposite the front face of the screen. The attachment feature is positioned proximate to the rear side of the protective housing. The attachment feature is configured to attach the protective housing to a dash of the watercraft. The attachment feature is positioned at a location centered between the second side and the third side of the protective housing, and the location is more proximate to the fourth side than the first side.

In some embodiments, the display may be configured to move between a first orientation and a second orientation. In the first orientation, the first side may be the uppermost side. The attachment feature may be configured to enable the display to be rotated at least about ninety degrees relative to the dash of the watercraft as the display rotates from the first orientation to the second orientation. Rotation of the display may result in the second side becoming an uppermost side of the protective housing.

In some embodiments, the attachment feature may be configured to enable the display to be tilted at different vertical tilt angles relative to the dash of the watercraft.

In some embodiments, the protective housing may be configured to be attached to the dash without any attachments at the first side, the second side, the third side, or the fourth side of the protective housing.

In some embodiments, the attachment feature may be configured to be attached to the dash before being attached to the protective housing.

In some embodiments, the rear side of the protective housing may be separated from the dash by a distance of more than about a centimeter when the rear side of the protective housing extends parallel to a portion of the dash proximate to an attachment point where the attachment feature is attached to the dash.

In some embodiments, the display may be configured to be locked in place relative to the dash, and the display may be configured to be unlocked by using a physical key or digital signal.

In some embodiments, an uppermost side of the protective housing may extend above a top surface of the dash when the protective housing is attached to the dash using the attachment feature. In some embodiments, the uppermost side of the protective housing may extend at least about 75 millimeters above the top surface of the dash when the protective housing is attached to the dash using the attachment feature.

In some embodiments, an extended portion may be positioned on the rear side of the protective housing, the extended portion may have an increased thickness relative to other portions of the protective housing, the extended portion may surround a recessed portion, the recessed portion may have a reduced thickness relative to the extended portion, and a seal may be formed between the attachment feature and the extended portion. Additionally, in some embodiments, a seal may be formed between the attachment feature and the extended portion when the protective housing is attached to the dash.

In some embodiments, the attachment feature may be integral to the protective housing.

In another example embodiment, a display system for use in a watercraft is provided. The display system comprises a display and an attachment feature. The display comprises a screen and a protective housing. The screen has a front face. The protective housing comprises a first side, a second side, a third side opposite the second side, a fourth side opposite the first side, and a rear side. The screen is attached to the protective housing so that the rear side is positioned opposite the front face of the screen. The attachment feature is positioned proximate to the rear side of the protective housing, and the attachment feature is at least partially hollow and defines an internal cavity. The attachment feature is configured to attach the protective housing to a dash of the watercraft, the attachment feature is configured to receive one or more cables within the internal cavity, and the attachment feature is configured to be attached to the dash before being attached to the protective housing.

In some embodiments, the rear side of the protective housing may be separated from the dash by a distance of more than about a centimeter when the rear side of the protective housing extends parallel to a portion of the dash proximate to an attachment point where the attachment feature is attached to the dash. In some embodiments, an uppermost side of the protective housing may extend at least about 75 centimeters above the top surface of the dash when the protective housing is attached to the dash using the attachment feature.

In some embodiments, the display may be configured to move between a first orientation and a second orientation, the first side may be the uppermost side in the first orientation, the attachment feature may be configured to enable the display to be rotated at least about ninety degrees relative to the dash of the watercraft as the display rotates from the first orientation to the second orientation, and rotation of the display may result in the second side becoming an uppermost side of the protective housing.

In another example embodiment, a method for assembling a display to a dash of a watercraft is provided. The method comprises providing a display. The display comprises a screen having a front face and a protective housing with a first side, a second side, a third side opposite the second side, a fourth side opposite the first side, and a rear side. The screen is attached to the protective housing so that the rear side is positioned opposite the front face of the screen. The method also comprises providing an attachment feature, positioning the attachment feature so that it abuts the dash of the watercraft, and attaching the attachment feature to the dash. After attaching the attachment feature to the dash, the method also includes positioning the display relative to the attachment feature so that the attachment feature is positioned in a location proximate to the rear side of the protective housing. The location is about halfway between the second side and the third side and the location is more proximate to the fourth side than the first side. After positioning the display relative to the attachment feature, the method also includes attaching the protective housing to the attachment feature with the attachment feature positioned proximate to the location.

In another example embodiment, a display system for use in a watercraft is provided. The display system comprises a display and an attachment feature. The display comprises a screen having a front face. The display also includes a protective housing comprising a first side, a second side, a third side opposite the second side, a fourth side opposite the first side, and a rear side. The screen is attached to the protective housing so that the rear side is positioned opposite the front face of the screen. The attachment feature is positioned proximate to the rear side of the protective housing, the attachment feature is configured to attach the protective housing to a dash of the watercraft, the attachment feature is positioned at a location about halfway between the second side and the third side, and the location is about halfway between the first side and the fourth side. The display is configured to move between a first orientation and a second orientation. The first side is the uppermost side in the first orientation, the attachment feature is configured to enable the display to be rotated at least about ninety degrees relative to the dash of the watercraft as the display rotates from the first orientation to the second orientation, and rotation of the display results in the second side becoming an uppermost side of the protective housing. In some embodiments, the protective housing may be configured to be attached to the dash without any attachments at the first side, the second side, the third side, or the fourth side of the protective housing. In some embodiments, an uppermost side of the protective housing may extend above a top surface of the dash when the protective housing is attached to the dash using the attachment feature.

In another example embodiment, a display system for use in a watercraft is provided. The display system comprises a display and an attachment feature. The display comprises a screen having a front face. The display also comprises a protective housing comprising a first side, a second side, a third side opposite the second side, a fourth side opposite the first side, and a rear side. The screen is attached to the protective housing so that the rear side is positioned opposite the front face of the screen. The attachment feature is positioned proximate to the rear side of the protective housing. The attachment feature is configured to attach the protective housing to a dash of the watercraft. The attachment feature is configured to be attached at either a first location or a second location relative to the protective housing. The first location is about halfway between the second side and the third side but is not centered between the first side and the fourth side of the protective housing. The second location is about halfway along a first side and the fourth side of the protective housing but is not centered along the second side and the third side of the protective housing. The attachment feature is configured to enable the display to be presented in a horizontal orientation when the attachment feature is attached to the protective housing at the first location, and the first side is the uppermost side in the horizontal orientation. The attachment feature is configured to enable the display to be presented in a vertical orientation when the attachment feature is attached to the protective housing at the second location, and the second side is uppermost side in the vertical orientation. In some embodiments, the protective housing may be configured to be attached to the dash without any attachments at the first side, the second side, the third side, or the fourth side of the protective housing.

### BRIEF DESCRIPTION OF THE DRAWINGS

Reference will now be made to the accompanying drawings, which are not necessarily drawn to scale, and wherein:
FIG. 1 is a schematic view illustrating an example watercraft including various marine devices, in accordance with some embodiments discussed herein;
FIG. 2A is a front view illustrating an example display system that may be used on a watercraft, in accordance with some embodiments discussed herein;
FIG. 2B is a side view illustrating the display system of FIG. 2A, in accordance with some embodiments discussed herein;
FIG. 2C is an exploded, side view illustrating the display system of FIG. 2A, in accordance with some embodiments discussed herein;
FIGS. 3A-3B are front views illustrating example display systems where displays have different sizes, in accordance with some embodiments discussed herein;
FIG. 3C is a perspective view illustrating an example display system, in accordance with some embodiments discussed herein;
FIG. 4A is a perspective view illustrating an example display system where the display is not yet attached to the dash, in accordance with some embodiments discussed herein;
FIG. 4B is an exploded view illustrating an example display system, in accordance with some embodiments discussed herein;
FIG. 5A is a side view illustrating an example display system where the display is not yet attached to the dash, in accordance with some embodiments discussed herein;
FIG. 5B is a side view illustrating the display system of FIG. 5A where the display is attached to the dash, in accordance with some embodiments discussed herein;
FIG. 6 is a rear view illustrating a protective housing of an example display, in accordance with some embodiments discussed herein;
FIG. 7 is a rear view illustrating a protective housing of an example display, in accordance with some embodiments discussed herein;
FIG. 8A is a rear view illustrating a protective housing of an example display, in accordance with some embodiments discussed herein;
FIG. 8B is a rear view illustrating the protective housing of FIG. 8A where the display has been attached in a different orientation than the orientation used in FIG. 8A, in accordance with some embodiments discussed herein;
FIG. 9A is a rear view illustrating a protective housing of an example display, in accordance with some embodiments discussed herein;
FIG. 9B is a rear view illustrating the protective housing of FIG. 9A where the display is in a different orientation than the orientation used in FIG. 9A, in accordance with some embodiments discussed herein;
FIG. 10A is a side view illustrating an example display positioned at a first vertical tilt angle, in accordance with some embodiments discussed herein;
FIG. 10B is a side view illustrating the display of FIG. 10A positioned at a second vertical tilt angle, in accordance with some embodiments discussed herein;
FIG. 10C is a perspective view illustrating an example attachment feature that has a curved shape, in accordance with some embodiments discussed herein;
FIG. 11 is a perspective view illustrating an example display system where a key is used to lock the display in place, in accordance with some embodiments discussed herein;
FIG. 12A is a front view illustrating an example display system where the display is in a horizontal orientation, in accordance with some embodiments discussed herein;
FIG. 12B is a front view illustrating the display system of FIG. 12A where the display is in a vertical orientation, in accordance with some embodiments discussed herein;
FIG. 13A is a rear perspective view illustrating an example display with a vertically extending connector, in accordance with some embodiments discussed herein;
FIG. 13B is a rear perspective view illustrating an example display with a connector hub having multiple horizontally extending connectors, in accordance with some embodiments discussed herein;
FIG. 14 is a rear perspective view illustrating a cable extending from the display, in accordance with some embodiments discussed herein;
FIG. 15 is a perspective view illustrating an example display system with a male connector on the dash and with a female connector on the display, in accordance with some embodiments discussed herein;
FIG. 16 is a perspective view illustrating an example display system with a light rail and a bezel, in accordance with some embodiments discussed herein;
FIG. 17 is a block diagram illustrating example components on a watercraft including a display system, in accordance with some embodiments discussed herein; and
FIG. 18 is a flow chart illustrating an example method for assembling a display to a dash of a watercraft, in accordance with some embodiments discussed herein.

### DETAILED DESCRIPTION

Example embodiments now will be described more fully hereinafter with reference to the accompanying drawings, in which some, but not all embodiments are shown. Additionally, any connections or attachments may be direct or indirect connections or attachments unless specifically noted otherwise. For example, while a display and a dash may be indirectly connected using an attachment feature, the display and the dash would still nevertheless be connected or attached together.

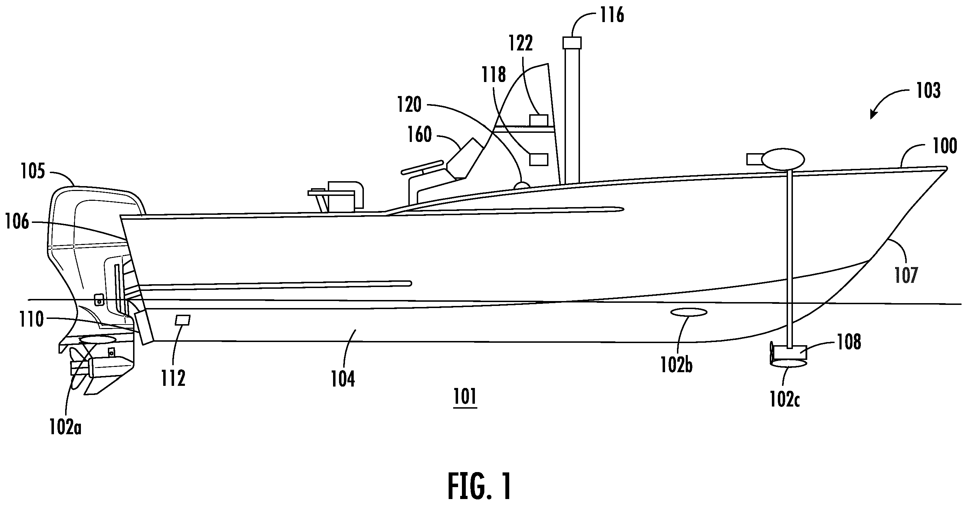

FIG. 1 illustrates an example watercraft 100 including various marine devices, in accordance with some embodiments discussed herein. As depicted in FIG. 1, the watercraft 100 (e.g., a vessel) is configured to traverse a marine environment, e.g. body of water 101, and may use one or more sonar transducer assemblies 102A, 102B, 102C disposed on and/or proximate to the watercraft. Notably, example watercraft contemplated herein may be surface watercraft, submersible watercraft, or any other implementation known to those skilled in the art. The sonar transducer assemblies 102A-102C may each include one or more sonar transducer elements (such as in the form of the example assemblies described herein) configured to transmit sound waves into a body of water, receive sonar returns from the body of water, and convert the sonar returns into sonar return data. Various types of sonar transducers may be provided-for example, a linear downscan sonar transducer, a conical downscan sonar transducer, a sonar transducer array, or a sidescan sonar transducer may be used. Each of the sonar transducer assemblies 102A-102C are configured to provide sonar data that may be stored and that may undergo further processing to form sonar images. The sonar data may include information representative of an underwater environment around a watercraft.

Depending on the configuration, the watercraft 100 may include a primary motor 105, which may be a main propulsion motor such as an outboard or inboard motor. Additionally, the watercraft 100 may include a trolling motor 108 configured to propel the watercraft 100 or maintain a position. The one or more sonar transducer assemblies (e.g., 102A-102C) may be mounted in various positions and to various portions of the watercraft 100 and/or equipment associated with the watercraft 100. For example, the sonar transducer assembly may be mounted proximate to the transom 106 of the watercraft 100, such as depicted by sonar transducer assembly 102A. The sonar transducer assembly may be mounted to the bottom or side of the hull 104 of the watercraft 100, such as depicted by sonar transducer assembly 102B. The sonar transducer assembly may also be mounted to the trolling motor 108, such as depicted by sonar transducer assembly 102C.

The watercraft 100 may also include one or more marine electronic devices 160, such as may be utilized by a user to interact with, view, or otherwise control various aspects of the various sonar systems described herein. In the illustrated embodiment, the marine electronic device 160 is positioned proximate the helm (e.g., steering wheel) of the watercraft 100 - although other locations on the watercraft 100 are contemplated. Likewise, additionally or alternatively, a remote device (such as a mobile device of a user) may include functionality of a marine electronic device.

The watercraft 100 may also comprise other components within the one or more marine electronic devices 160 or at the helm. In FIG. 1, the watercraft 100 comprises a radar 116, which is mounted at an elevated position (although other positions relative to the watercraft are also contemplated). The watercraft 100 also comprises an AIS transceiver 118, a direction sensor 120, and a camera 122, and these components are each positioned at or near the helm (although other positions relative to the watercraft 100 are also contemplated). Additionally, the watercraft 100 comprises a rudder 110 at the stern of the watercraft 100, and the rudder 110 may be positioned on the watercraft 100 so that the rudder 110 will rest in the body of water 101. In other embodiments, these components may be integrated into the one or more marine electronic devices 160 or other devices. Another example device on the watercraft 100 includes a temperature sensor 112 that may be positioned so that it will rest within or outside of the body of water 101. Other example devices include a wind sensor, one or more speakers, and various vessel devices/features (e.g., doors, bilge pump, fuel tank, etc.), among other things. Additionally, one or more sensors may be associated with marine devices; for example, a sensor may be provided to detect the position of the primary motor 105, the trolling motor 108, or the rudder 110. The watercraft 100 includes a bow 103 at the front end of the watercraft 100, and the watercraft 100 includes a keel 107, which may extend along a centerline of the watercraft 100 and generally along the forward direction of the watercraft 100.

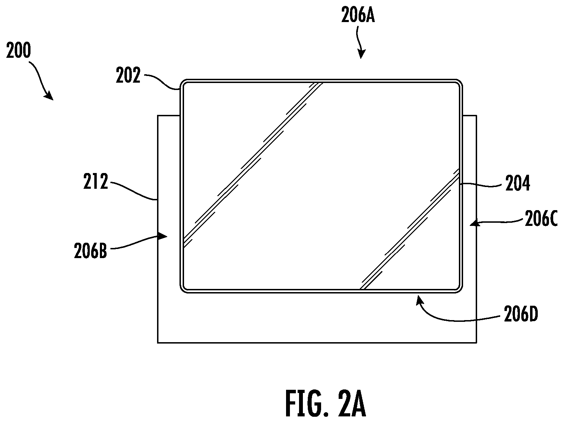

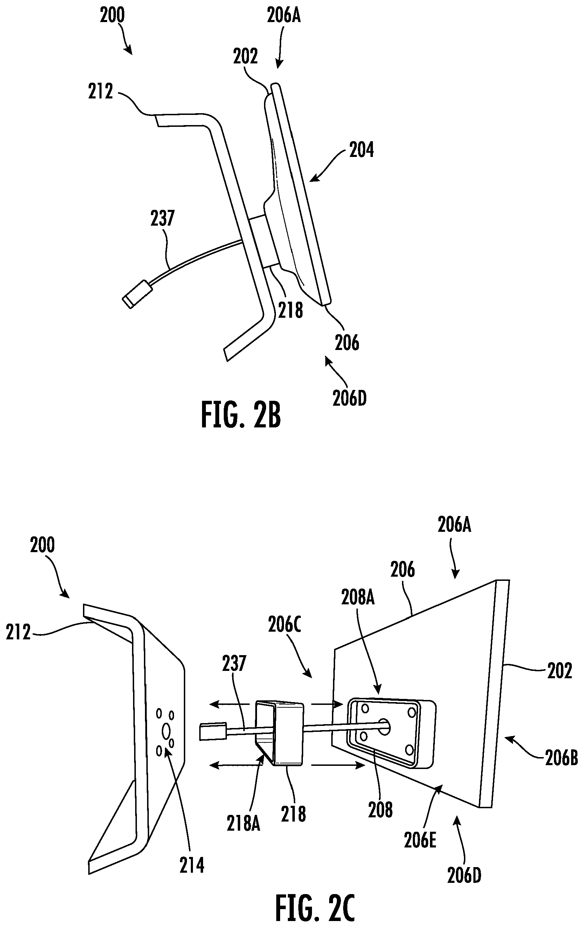

An example display system 200 that may be used on a watercraft is illustrated in the front view of FIG. 2A. FIG. 2B is a side view illustrating the display system 200 of FIG. 2A, and FIG. 2C is an exploded, side view illustrating the display system 200 of FIG. 2A. The display system 200 comprises a display 202 and an attachment feature 218, with the display 202 comprising a screen 204 having a face. The face of the screen 204 may be a front face that faces a user. The display 202 also includes a protective housing 206 comprising a first side 206A, a second side 206B, a third side 206C, a fourth side 206D, and a fifth side 206E. In the horizontal orientation of FIGS. 2A-2C, the first side 206A is the uppermost side, the second side 206B is a first lateral side, the third side 206C is a second lateral side opposite the second side 206B, the fourth side 206D is the bottom side, and the fifth side 206E is a rear side. However, the relative positioning of the sides 206A-206E may be adjusted if the display 202 is rotated relative to the dash. The screen 204 is attached to the protective housing 206 so that the fifth side 206E is positioned opposite the face of the screen 204.

The attachment feature 218 is positioned proximate to the fifth side 206E of the protective housing 206. This attachment feature 218 is configured to attach the protective housing 206 to a dash 212 of the watercraft. The attachment feature 218 is positioned at a location centered between the second side 206B and the third side 206C, and this location is more proximate to the fourth side 206D than the first side 206A. Thus, the attachment feature 218 has a low central bias.

As illustrated in FIG. 2C, an extended portion 208 is positioned on the rear side of the protective housing 206. The extended portion 208 has an increased thickness relative to other portions of the protective housing 206, and the extended portion 208 surrounds a recess 208A. A recessed portion positioned proximate to the recess 208A has a reduced thickness relative to the extended portion 208, and a seal may be formed between the attachment feature 218 and the extended portion 208. In some embodiments, the attachment feature 218 may be configured to be received within the recessed portion 208A. However, in other embodiments, the attachment feature 218 may extend around the perimeter of the extended portion 208. One or more O-rings or other components may be used to help form a seal between the attachment feature 218 and the extended portion 208 in some embodiments, but an effective seal may be formed between the attachment feature 218 and the extended portion 208 without use of any O-rings or other components in other embodiments. A seal may also be formed between the attachment feature 218 and the dash 212 in some embodiments with or without the use of O-rings in some embodiments. Seals may be beneficial to ensure that the display system 200 and other display systems described herein are watertight, thereby minimizing risk of exposure for electrical components within the display system 200 to water.

Connectors may be positioned on the display 202 proximate to the fifth side 206E of the protective housing 206, and the connectors may be positioned within the recessed portion 208A. The attachment feature 218 is also partially hollow and defines an internal cavity 218A. This internal cavity 218A allows one or more cables 237 to extend through the internal cavity 218A so that the cable(s) 237 may extend from inside the dash 212 to the connectors of the display 202. Cable(s) 237 may extend from inside of the dash 212, out of a cable hole 214, through the internal cavity 218A of the attachment feature 218, and all the way to any connectors located in the recess 208A. While cables 237 and other cables may be used in various embodiments described herein, wireless power (e.g., inductive charging) or wireless data transfer may occur between components (e.g., components within the dash 212 and the display 202). Wireless power or data transfer may be beneficial to make display systems more waterproof as connectors may effectively act as a hole in the product and can be fragile. The cable hole 214 may be formed using a hole saw, but other approaches may be utilized to form the cable hole 214.

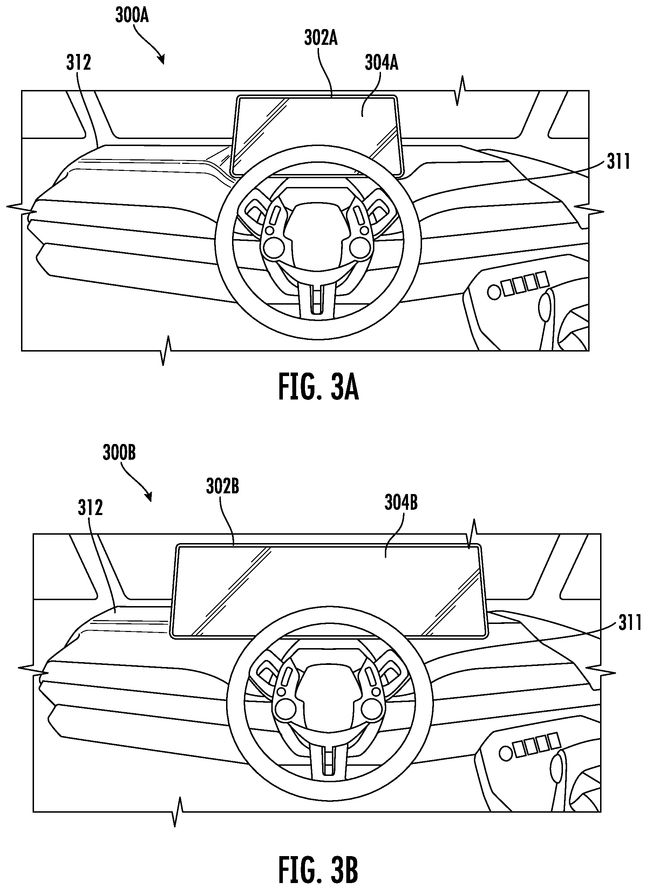

FIGS. 3A-3B are front views illustrating example display systems 300A, 300B where displays 302A, 302B have different sizes. The display system 300A of FIG. 3A comprises a display 302A and an attachment feature (not shown). The attachment feature assists in attaching the display 302A to the dash 312. Similarly, the display system 300B of FIG. 3B comprises a display 302B and an attachment feature (not shown). The attachment feature assists in attaching the display 302B to the dash 312. Both the display 302A and the display 302B are centered proximate to the steering wheel 311. Additionally, the displays 302A, 302B each extend above the dash 312. Thus, the dash 312 may be provided with a lower profile, allowing the user to have greater visibility of the surrounding environment.

As described further herein, the display systems described herein may beneficially be provided with a wide array of sizes for displays. A first display (e.g., display 302A) may be removed and replaced by a second display (e.g., display 302B) having a different size. The change in displays may be made without requiring any mechanical adjustments to the dash 312 itself. This ability to retrofit new displays having different sizes is beneficial as it allows sellers to upsell to different displays. For example, a seller may upsell from the display 302A having the smaller screen 304A to the display 302B having a larger screen 304B.

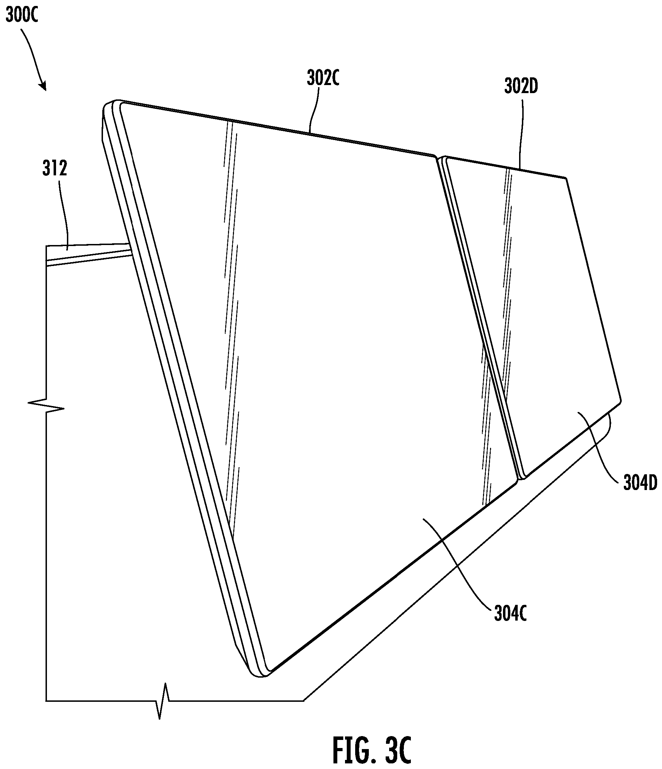

FIG. 3C is a perspective view illustrating another example display system 300C with two displays 302C, 302D. The first display 302C has a screen 304C, and the second display 302D has a screen 304D that is equal in size to the screen 304C. The display system 300C also includes one or more attachment features (not shown). The attachment feature(s) may attach the displays 302C, 302D to the dash 312. In some embodiments, a single attachment feature may attach both of the displays 302C, 302D to the dash 312, but two or more attachment features may be used to attach the displays 302C, 302D to the dash 312 in some embodiments. The displays 302C, 302D may be attached to the dash 312 using the various approaches described herein. Additionally, three or more displays may be provided in some embodiments.

The screens 304C, 304D are positioned side-by-side in the embodiment illustrated in FIG. 3C, with each screen 304C, 304D extending within the same plane. However, in other embodiments, the screens 304C, 304D may extend in different planes or the screens 304C, 304D may not be planar in shape.

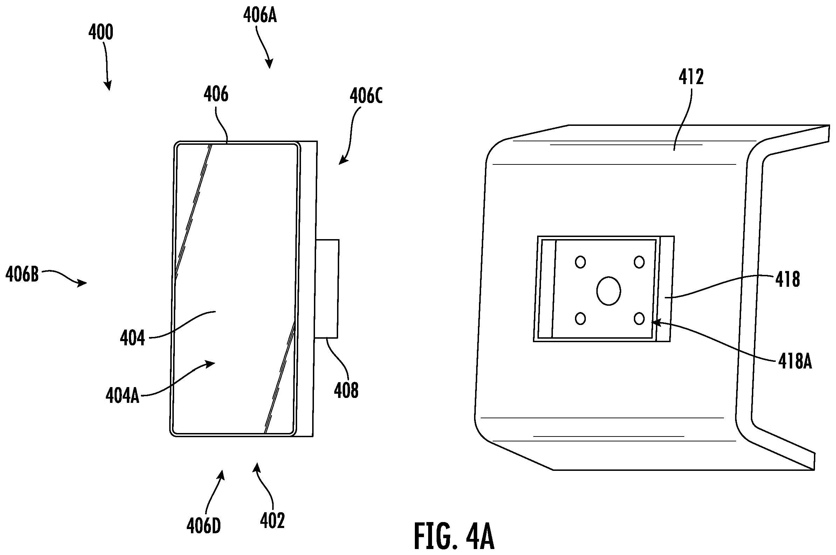

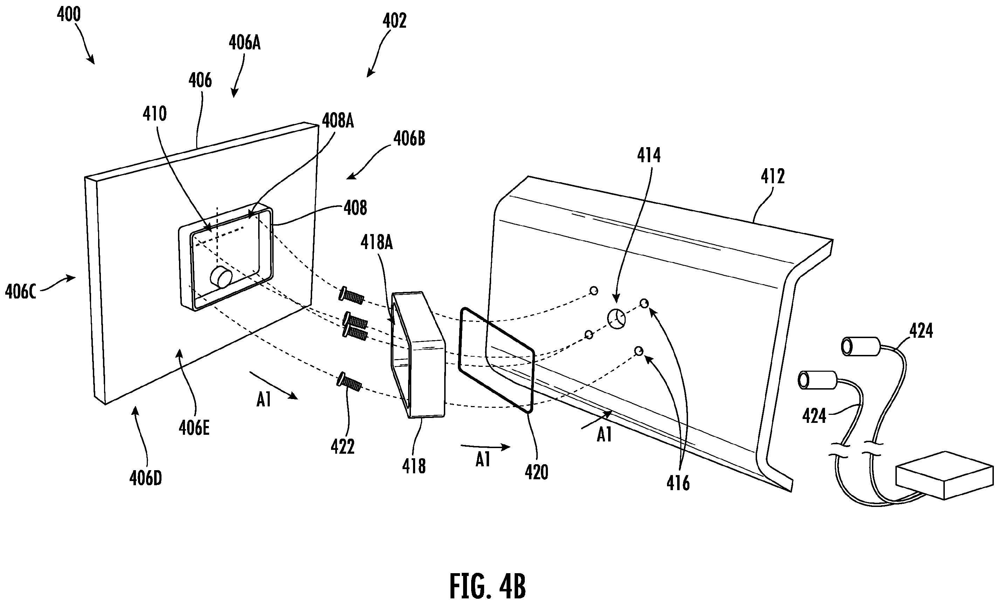

An example display system 400 is illustrated in FIGS. 4A and 4B where the display 402 is not yet attached to the dash 412. FIG. 4A provides a perspective view of the display system 400 while FIG. 4B provides an exploded view illustrating the display system 400.

Similar to other displays described herein, the display 402 comprises a protective housing 406. The protective housing 406 comprises a first side 406A, a second side 406B, a third side 406C, a fourth side 406D, and a fifth side 406E. In the horizontal orientation of FIGS. 4A-4B, the first side 406A is the uppermost side, the second side 406B is a first lateral side, the third side 406C is a second lateral side opposite the second side 406B, the fourth side 406D is the bottom side, and the fifth side 406E is a rear side. However, the relative positioning of the sides 406A-406E may be adjusted if the display 402 is rotated. The protective housing 406 also comprises a center 410, with this center 410 being centered between sides 406A, 406D and with this center 410 being centered between sides 406B, 406C.

The display 402 comprises a screen 404, with the screen 404 having a face 404A that may face the user. The screen 404 of the display 402 may be attached to the protective housing 406 so that the fifth side 406E is positioned opposite the face 404A of the screen 404.

The display system 400 also includes an attachment feature 418. The attachment feature 418 may be positioned proximate to the fifth side 406E of the protective housing 406. The attachment feature 418 may be configured to attach the protective housing 406 to the dash 412 of the watercraft as indicated by arrows A1. The attachment feature 418 is positioned at a location centered along a width of the protective housing 406, and the location is more proximate to the fourth side 406D of the protective housing 406 than the first side 406A of the protective housing 406. However, in other embodiments, the attachment feature 418 may be positioned at other locations relative to the protective housing 406.

The attachment feature 418 may be used to attach the fifth side 406E of the protective housing 406 to the dash 412 without requiring any sort of attachment at the first side 406A, the second side 406B, the third side 406C, or the fourth side 406D. Consequently, different sized displays and protective housings may easily be attached or retrofitted to the dash 417. By contrast, in other systems where displays are attached to the dash at the sides of the protective housing or the display, it becomes highly difficult to retrofit displays of different sizes to a dash as adjustments must be made to the dash.

The attachment feature 418 may be configured to be attached to the dash 412 as indicated by arrows A1 before the attachment feature 418 is attached to the protective housing 406. However, in other embodiments, the attachment feature 418 may be attached to the protective housing 406 first. In some embodiments, the attachment feature 418 may be attached to the dash 412 using fasteners 422, with these fasteners 422 provided in the form of screws in the embodiment of FIG. 4B. Holes 416 may be positioned in the dash 412, and these holes 416 may be threaded holes. The fasteners 422 may extend through holes in the attachment feature 418 and into the holes 416 to attach the attachment feature 418 to the dash 412. However, various other approaches may be used to attach the attachment feature 418 to the dash 412. For example, the attachment feature 418 may have a snap fit engagement, a push fit engagement (e.g., where an element is pushed in to engage with clips, which may be disengaged), a rotatable or slidable lock, etc. In various embodiments, the attachment feature 418 may be attached to the dash without requiring an installer to enter the space behind the dash 412.

Attachment of the attachment features described herein to other components such as a dash or a protective housing may be accomplished either with additional tools or without them. Where tools are used to attach the display from the front, the installer may move the protective housing 406 towards the attachment feature 418 until the extended portion 408 of the protective housing 406 engages the attachment feature 418. For error prevention and mistake proofing purposes, the extended portion 408 may extend outwardly from the protective housing 406 so that the extended portion 408 can help guide the attachment feature 418 as the attachment feature 418 is attached to the display 402. In some embodiments, the installer may hear a clicking sound when the extended portion 408 engages the attachment feature 418. Upon engagement, the installer may receive visual, audible, and haptic feedback that an appropriate connection has been made. The clicking sound may be provided by a metal clipping mechanism, a plastic clipping mechanism, magnets, and/or other components. In some embodiments, assembling the two pieces together may form electronic connections (e.g., where male and female connectors are present, where pogo pins are used, etc.). However, engagement of the attachment feature 418 and the extended portion 408 may occur in other ways so that no clicking sound occurs. To assist in securing and locking the display 402 in place, the installer may use a tool such as an Allen key or some other tool to actuate a locking mechanism whose function it is to prevent vibration and/or remove "play" or freedom of movement for components within the display system 400. Additionally or alternatively, the display 402 may be secured in place by preventing the display 402 from bouncing out during use. This may be accomplished by using rotating or slide cam type attachment approaches or similar attachment approaches, and this may also be accomplished with a locking screw that is wound up or a combination of locks.

Other tools that may be utilized to facilitate attachment of components are a hand screw and a caulking gun mechanism or something similar. With the hand screw, an individual fastener designs such as wing nuts, oversized hand screws, gimbal knobs, large locking rings that go around all the connectors, and other fastener designs may be used.

With the caulking gun mechanism, metal rods may be inserted into a base, and the metal rods may then be captured by metal elements which prevent the rods from moving in or out.

In some embodiments, assembly of the display system may be accomplished using a hand activated cam locking system. This hand activated cam lock system may have an over center lock in some embodiments, but it may not have an over center lock in other embodiments.

While various embodiments described herein may allow for a display to be attached to the dash from the front of the dash without an installer being required to enter the space behind the dash 412, display systems may be assembled in some embodiments from the back or from behind the dash 412. Additionally or alternatively, an installation from the back approach may be implemented using threaded rods (e.g., four threaded rods), with the threaded rods being secured into the protective housing of the display. The threaded rods may go through the dash where the installer may then add fasteners in the form of nuts or wingnuts to tighten the display assembly to the dash. The installer would likely need to have access to the space behind the dash in order to execute this approach so that nuts and wingnuts may be installed, which can be more difficult or time consuming. Additionally, the display may be attached to the dash at its edges, so upgrading to a larger display may require adjustments to the size and shape of the dash itself and a hole within the dash. Regardless of whether a display is attached from the front of the dash or from the back of the dash, tactile indications may be provided to assist in attaching the display (e.g., to indicate that it is held in place, to indicate that it is locked in place, etc.).

An extended portion 408 has a greater thickness than other portions of the protective housing 406, and the extended portion 408 defines a recess 408A therein. The attachment feature 418 may be configured to attach to the extended portion 408 or another portion of the protective housing 406. Various approaches may be used to attach the attachment feature 418 to the protective housing 406. For example, the attachment feature 418 and the protective housing 406 may have a snap fit engagement, a push fit engagement, a rotatable or slidable lock, etc.

An O-ring 420 may be incorporated at the attachment feature 418, with the O-ring 420 being used to assist in forming a seal between the attachment feature 418 and the extended portion 408 when the protective housing 406 is attached to the dash 412. A seal may also be formed between the attachment feature 418 and the dash 412 in some embodiments with or without the use of O-rings in some embodiments. When the attachment feature 418 is attached to the dash 412, structural reinforcement may be provided for the attachment feature 418 in some embodiments in order to enable the attachment feature 418 to better handle any forces and stresses acting on the attachment feature 418 when the display 402 is attached to the attachment feature 418. These reinforcements may be provided in the form of fasteners, additional reinforcement bars, etc. However, structural reinforcement may not be necessary in other embodiments.

The protective housing 406 of the display 402 comprises an extended portion 408 positioned proximate to the fifth side 406E of the protective housing 406. Similar to the extended portion 508 described herein, extended portion 408 has an increased thickness relative to other portions of the protective housing 406. The extended portion 408 surrounds a recess 408A, and a recessed portion proximate to the recess 408A has a reduced thickness relative to the extended portion 408. In some embodiments, the attachment feature 418 may be configured to be received within the recess 408A. However, in other embodiments, the attachment feature 418 may extend around the perimeter of the extended portion 408.

Connectors may be positioned within the recess 408A. The attachment feature 418 is also partially hollow and defines an internal cavity 418A. This internal cavity 418A allows one or more cables 424 to extend through the internal cavity 418A so that the cables 424 may extend from inside the dash 412 to the connectors of the display 402. Thus, the attachment feature 418 may assist in concealing cable(s) 424, allowing the display system 400 to have a more aesthetically pleasing appearance. Cable(s) 424 may extend from inside of the dash 412, out of a cable hole 414, through the O-ring 420 and the internal cavity 418A of the attachment feature 418, and all the way to any connectors located in the recess 408A. The O-ring 420 may assist in forming an effective seal between the attachment feature 418 and the extended portion 408. This seal may protect cable(s) 424, any connectors, and any other electronic components in the recess 408A or in the internal cavity 418A. While only one O-ring 420 is illustrated in FIG. 4B, multiple O-rings may be used in other embodiments. In other embodiments, an effective seal may be formed between the extended portion 408 and the attachment feature 418 without using any O-ring.

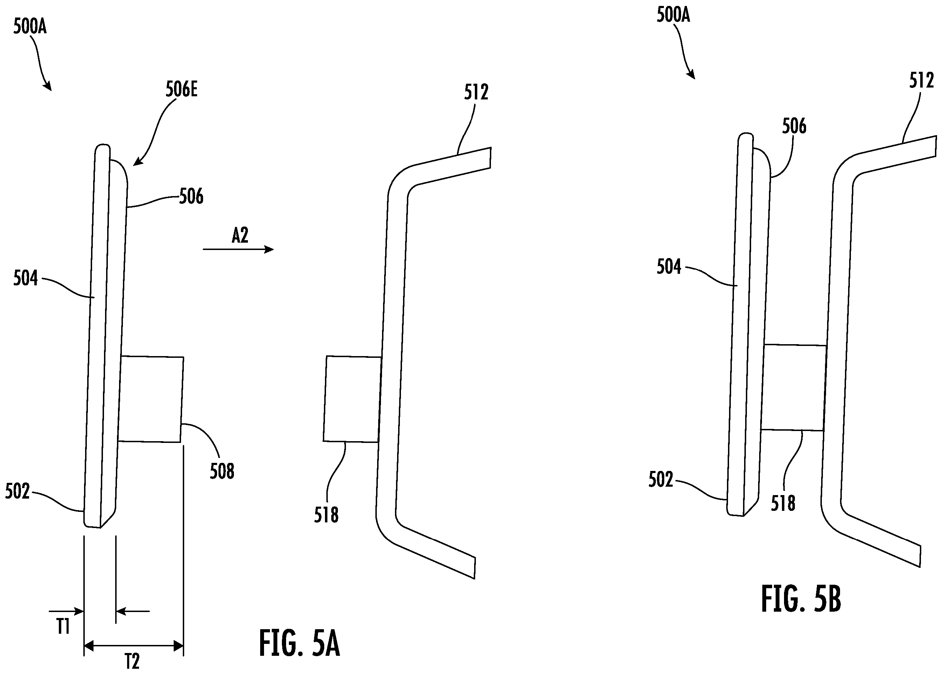

In some embodiments, the extended portion of a protective housing for a display and an attachment feature may be attached together by a snap fit engagement by simply pushing the display towards the attachment feature until a clicking sound is heard to indicate that the snap fit engagement has been completed. FIG. 5A and 5B illustrate an example of this. FIG. 5A is a side view illustrating an example display system 500A where the protective housing 506 of a display 502 is not yet attached to the dash 512 or the attachment feature 518, and FIG. 5B is a side view illustrating the display system 500A of FIG. 5A where the protective housing 506 of the display 502 is attached to the dash 512 using the attachment feature 518.

The display 500 comprises a screen 504 and a protective housing 506. The protective housing 506 of the display 500 comprises an extended portion 508 positioned proximate to the side 506E of the protective housing 506, with side 506E being a rear side of the protective housing 506. The extended portion 508 has an increased thickness relative to other portions of the display 500. For example, at positions away from the extended portion 508, the display 502 generally has a thickness T1. A thickness T2 is present at the extended portion, and the thickness T2 is greater than the thickness T1. Various values may be used for the thicknesses T1, T2 as various types of displays may be assembled to the dash using approaches described herein.

The extended portion 508 may be attached to the attachment feature 518 by a snap fit engagement by simply pushing the display 500 towards the attachment feature 518. For example, the protective housing 506 of a display 502 is not yet attached to the dash 512 or the attachment feature 518 in FIG. 5A. The display 502 may be urged in the direction A2 towards the dash 512 and the attachment feature 518. In FIG. 5B, the protective housing 506 of the display 502 is attached to the dash 512 using the attachment feature 518, with the attachment feature 518 and the extended portion 508 engaging each other using a snap fit engagement.

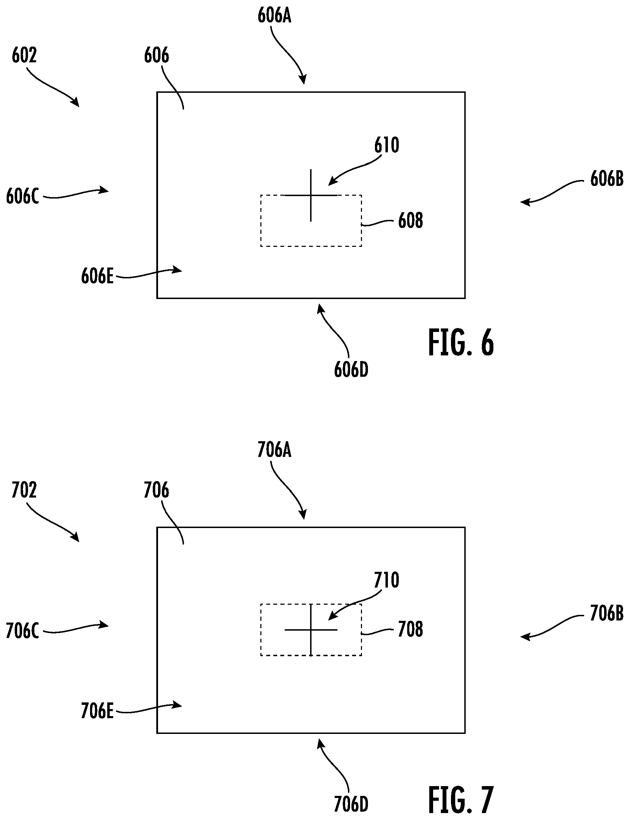

A rear view illustrating a protective housing of an example display 602 is illustrated in FIG. 6. Similar to other displays described herein, the display 602 comprises a protective housing 606. The protective housing 606 comprises a first side 606A, a second side 606B, a third side 606C, a fourth side 606D, and a fifth side 606E. The protective housing 606 also comprises a center 610, with this center 610 being centered between sides 606A, 606D and with this center 610 being centered between sides 606B, 606C. In the horizontal orientation of FIG. 6A, the first side 606A is the uppermost side, the second side 606B is a first lateral side, the third side 606C is a second lateral side opposite the second side 606B, the fourth side 606D is the bottom side, and the fifth side 606E is a rear side. However, the relative positioning of the sides 606A-606E may be adjusted if the display 602 is rotated.

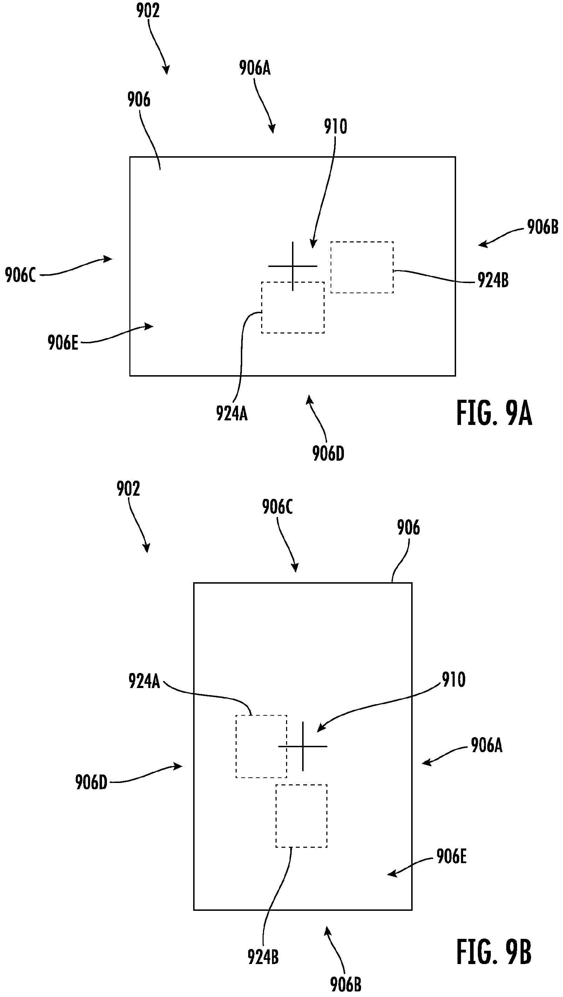

In FIG. 6, the protective housing 606 comprises an extended portion 608. This extended portion 608 is centered between the second side 606B and the third side 606C. The extended portion 608 is not centered between the first side 606A and the fourth side 606D. Instead, the extended portion 608 is positioned closer to the fourth side 606D than the first side 606A (and below the center 610 when in the horizontal orientation illustrated in FIG. 6). The positioning of the extended portion 208 of FIG. 2C, the positioning of the extended portion 408 of FIGS. 4A-4B, and the positioning of the extended portion 508 of FIGS. 5A-5B may be similar to the positioning of the extended portion 608 in FIG. 6. However, these extended portions may be positioned different in other embodiments (e.g., like the positioning of extended portion 708 of FIG. 7 or like the positioning of attachment areas 924A, 924B in FIGS. 9A and 9B). Positioning the extended portion 608 at the location illustrated in FIG. 6 may allow the attachment feature to be attached with a low and central bias at the fifth side 606E, and this may allow more bracket consistency across product sizes. Positioning the attachment feature low and centrally may enable the attachment feature to better handle the forces exerted on the attachment feature by the display 602, especially when the display 602 does not extend vertically. Providing a low central bias for the attachment feature and the extended portion 608 may also help to avoid interference with a steering wheel 311 (*see* FIG. 3A-3B) or other portions of the dash 312 (*see* FIG. 3A-3B), especially where a larger display 606 is used. Additionally, positioning the attachment feature low and centrally may allow the attachment feature to work with various displays having different sizes, which ultimately allows sellers to have a greater opportunity to upsell different displays that may be bigger-the lower attachment locations make is less likely that upgraded, larger displays will come in contact with the dash 312, the steering wheel 311, or other components. Providing a low central bias for the attachment feature and the extended portion 608 may allow for more space on a dash to be occupied by other components. The attachment feature may or may not integrate tilt functionality.

The positioning of the attachment feature and the extended portion 608 may be beneficial for other reasons. By providing a central low bias for the attachment feature and the extended portion 608, displays may be easily changed out without requiring the use of a different attachment feature.

FIG. 7 is a rear view illustrating a protective housing 706 of an example display 702. Similar to other displays described herein, the display 702 comprises a protective housing 706. The protective housing 706 comprises a first side 706A, a second side 706B, a third side 706C, a fourth side 706D, and a fifth side 706E. The protective housing 706 also comprises a center 710, with this center 710 being centered between sides 706A, 706D and with this center 710 being centered between sides 706B, 706C. In the horizontal orientation of FIG. 7, the first side 706A is the uppermost side, the second side 706B is a first lateral side, the third side 706C is a second lateral side opposite the second side 706B, the fourth side 706D is the bottom side, and the fifth side 706E is a rear side. However, the relative positioning of the sides 706A-706E may be adjusted if the display 702 is rotated. The protective housing 706 also comprises a center 710, with this center 710 being centered between sides 706A, 706D and with this center 710 being centered between sides 706B, 706C.

In FIG. 7, the extended portion 708 of the protective housing 706 is centered on the fifth side 706E of the protective housing 706 so that any attachment feature may be positioned at a central location relative to the protective housing 706. The extended portion 708 is positioned a location centered along a width of the protective housing 706 (from second side 706B to third side 706C in FIG. 7), and the extended portion 708 is also positioned at a location centered along a height of the protective housing 706 (from first side 706A to fourth side 706D in FIG. 7). By positioning the extended portion in this manner, the display may be rotated about an axis extending through the center 710 and that extends normal to the fifth side 706E or the front surface of the screen opposite the fifth side 706E. As a result, the positioning of the display may remain more consistent from the perspective of the user regardless of the orientation used for a display. By contrast, if you rotate the display 602 of FIG. 6 about the center of the extended portion 608 so that it moves to a vertical orientation, the display 600 would suddenly be offset to the left or the right, and the user would have to shift to the left or the right in his seat to be centered relative to the display. This would result in a potentially poor ergonomic setup. Additionally, by centering the extended portion 708 and any attachment feature, the displacement in the positioning of any connectors located inside of the extended portion 708 as a result of any rotation of the display 702 may be lower. Thus, the display 702 may be rotated without disconnecting any cables from connectors, and the risk of damage to connectors or cables and the risk of disconnections may be reduced.

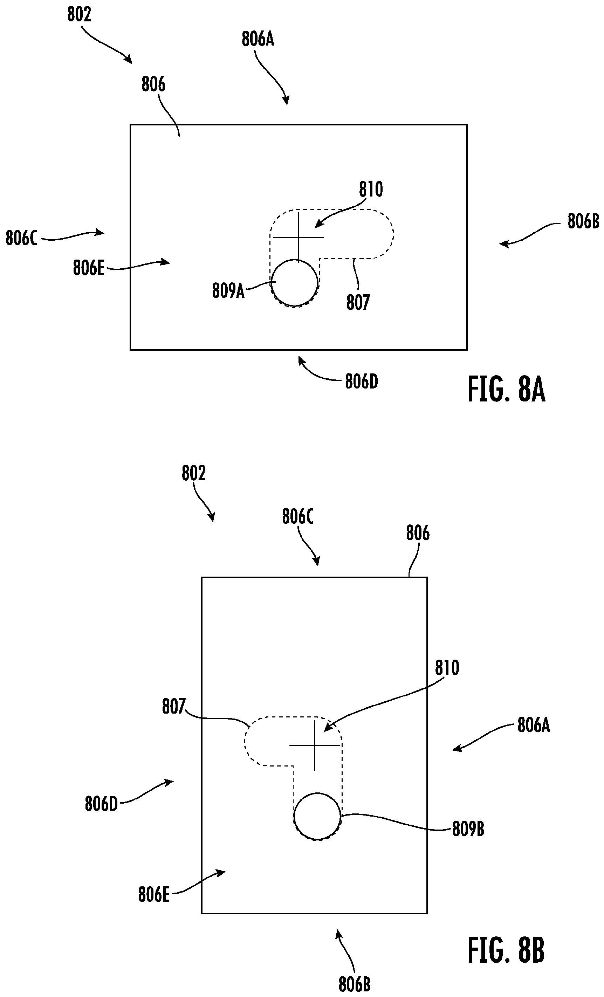

FIG. 8A is a rear view illustrating a rear side of a protective housing 806 of an example display 802, and FIG. 8B is a rear view illustrating the protective housing 806 of FIG. 8A where the display 802 is in a different orientation than the orientation used in FIG. 8A. Similar to other displays described herein, the display 802 comprises a protective housing 806. The protective housing 806 comprises a first side 806A, a second side 806B, a third side 806C, a fourth side 806D, and a fifth side 806E. In the horizontal orientation of FIG. 8A, the first side 806A is the uppermost side, the second side 806B is a first lateral side, the third side 806C is a second lateral side opposite the second side 806B, the fourth side 806D is the bottom side, and the fifth side 806E is a rear side. However, the relative positioning of the sides 806A-806E may be adjusted. For example, in the vertical orientation of FIG. 8B, the first side 806A and the fourth side 806D are opposing lateral sides, the second side 806B is the bottom side, the third side 806C is an uppermost side opposite the second side 806B, and the fifth side 806E remains as the rear side. The protective housing 806 also comprises a center 810, with this center 810 being centered between sides 806A, 806D and with this center 810 being centered between sides 806B, 806C.

A track 807 may be formed at the fifth side 806E of the protective housing 806. This track 807 may allow an attachment feature to be attached to the first position 809A or the second position 809B. The track 807 may have walls around the perimeter of the track 807, with a lip formed at the edges of the walls to retain an attachment feature within the track 807. In some embodiments, the display 802 may be moved between a first position 809A and a second position 809B or vice versa by moving the attachment feature along the track 807, and the attachment feature may remain engaged with the protective housing 806 as the attachment feature moves along a portion of the track 807 or the entire track 807. As the attachment feature is moved along the track 807, the display 802 may be rotated from a horizontal orientation to a vertical orientation or vice versa. Rotation of the display 802 may occur when the attachment feature is positioned proximate to the center 810.

In some embodiments, an attachment feature may be removably attached to a protective housing at two or more locations, allowing a display to be easily adjusted between a horizontal orientation and a vertical orientation. FIG. 9A is a rear view illustrating a protective housing 906 of an example display 902 where the display 902 is oriented in a horizontal orientation, and FIG. 9B is a rear view illustrating a protective housing 906 of an example display 902 where the display 902 is oriented in a vertical orientation.

Similar to other displays described herein, the display 902 comprises a protective housing 906. The protective housing 906 comprises a first side 906A, a second side 906B, a third side 906C, a fourth side 906D, and a fifth side 906E. In the horizontal orientation of FIG. 9A, the first side 906A is the uppermost side, the second side 906B is a first lateral side, the third side 906C is a second lateral side opposite the second side 906B, the fourth side 906D is the bottom side, and the fifth side 906E is a rear side. However, the relative positioning of the sides 906A-906E may be adjusted. For example, in the vertical orientation of FIG. 9B, the first side 906A and the fourth side 906D are opposing lateral sides, the second side 906B is the bottom side, the third side 906C is an uppermost side opposite the second side 906B, and the fifth side 906E remains as the rear side. The protective housing 906 also comprises a center 910, with this center 910 being centered between sides 906A, 906D and with this center 910 being centered between sides 906B, 906C.

The display 902 comprises a first attachment area 924A and a second attachment area 924B, with these attachment areas 924A, 924B being positioned on the fifth side 906E of the protective housing 906. The attachment areas 924A, 924B may include extended portions similar to other embodiments. The attachment areas 924A, 924B may each be configured to receive an attachment feature and attach to the attachment feature, with the attachment feature being configured to attach the protective housing 906 to the dash of a watercraft.

The attachment area 924A is positioned at a first location on the protective housing 906 while the attachment area 924B is positioned at a second location on the protective housing 906. The first location for the attachment area 924A is centered between the side 906B and the side 906C, but the first location of the attachment area 924A is positioned closer to the fourth side 906D than the side 906A. When an attachment feature is attached to the protective housing 906 at the first location of the attachment area 924A, the attachment feature is configured to enable the display 902 to be presented in a horizontal orientation as illustrated in FIG. 9A. The second location for the attachment area 924B is centered between the side 906A and the fourth side 906D, but the second location of the attachment area 924B is positioned closer to side 906B than the side 906C. When an attachment feature is attached to the protective housing at the second location of the attachment area 924B, the attachment feature is configured to enable the display 902 to be presented in a vertical orientation as illustrated in FIG. 9B.

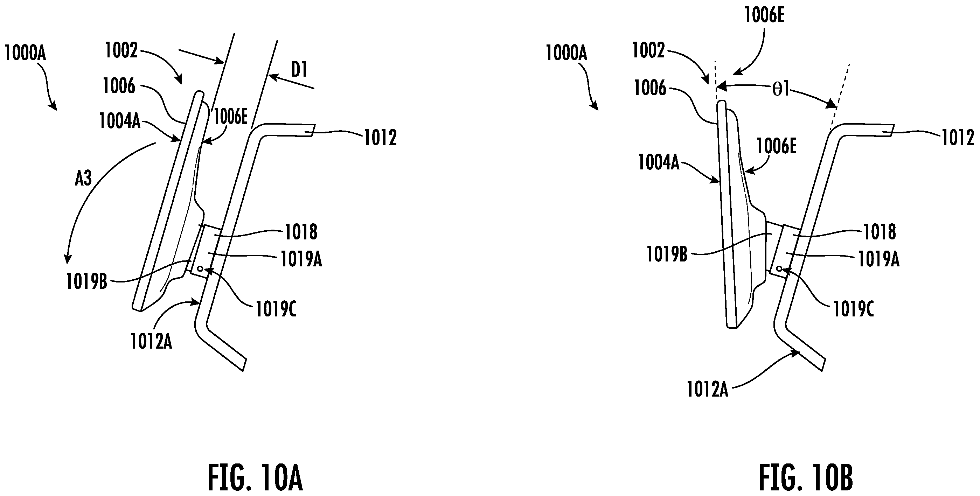

In some embodiments, display systems may be configured so that displays may be tilted at different vertical tilt angles relative to the dash, and FIGS. 10A-10B illustrate examples of this. FIG. 10A is a side view illustrating an example display positioned at a first vertical tilt angle, and FIG. 10B is a side view illustrating the display of FIG. 10A positioned at a second vertical tilt angle.

The display assembly 1000A illustrated in FIGS. 10A and 10B comprises a display 1002 and an attachment feature 1018, with the display 1002 having a protective housing 1006 with a side 1006E as well as other sides. In FIG. 10A, the side 1006E is a rear side of the protective housing 1006. The display 1002 also has a screen including a front surface 1004A. The display 1002 is attached to a dash surface 1012A of a dash 1012 using the attachment feature 1018. In FIG. 10A, the display 1002 is oriented so that the front surface 1004A is positioned at a vertical tilt angle relative to the dash surface 1012A, with this vertical tilt angle being about zero since the front surface 1004A and the dash surface 1012A are about parallel in FIG. 10A. The display 1002 may be rotated in the direction indicated by the arrow A3 to obtain the vertical tilt angle illustrated in FIG. 10B. In FIG. 10B, the display 1002 is oriented so that the front surface 1004A is positioned at a different vertical tilt angle Θ1 relative to the dash surface 1012A. This vertical tilt angle Θ1 may be about 20 degrees, but other vertical tilt angles may be used.

When the front surface 1004A extends about parallel to the dash surface 1012A of the dash 1012 (e.g. at a location proximate to an attachment point) as illustrated in FIG. 10A, the side 1006E is separated from the dash surface 1012A by a distance D1. This distance D1 may be greater than zero, greater than a centimeter, greater than two centimeters, greater than five centimeters, etc. While the vertical tilt angle is changed between FIGS. 10A-10B, the attachment feature 1018 may be configured to allow the displays to be tilted in other ways as well (e.g., rotating about a vertically extending axis or some other axis).

The attachment feature 1018 may be configured to enable the vertical tilt angle Θ1 to be easily adjusted without having to completely remove the display 1002 from the dash 1012. The attachment feature 1018 may include a first portion 1019A and a second portion 1019B. The first portion 1019A may be attached to the dash 1012, and the second portion 1019B may be attached to the protective housing 1006 of the display 1002. The first portion 1019A may be hollow and define an internal cavity, and the second portion 1019B may be received within this internal cavity. The first portion 1019A has a hole 1019C, which may be positioned on one side or on opposing sides of the first portion 1019A, and the second portion 1019B may have holes or grooves (not shown). To adjust the vertical tilt angle Θ1, the second portion 1019B may be allowed to extend into the internal cavity of the first portion 1019A in the desired amount (which may be easily adjusted), and then a fastener may be received at the hole 1019C. Alternatively, a lock may be used in place of the hole 1019C, and the lock may be used to lock the second portion 1019B in place unless and until a key or something else is used to move the lock to an unlocked state.

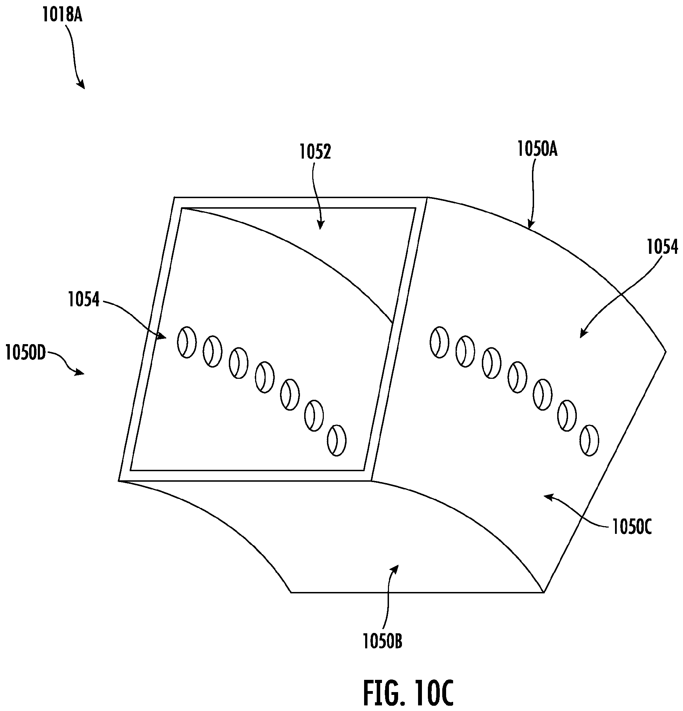

In some embodiments, an attachment feature may be curved in shape to help allow a vertical tilt angle of the display to be changed. The perspective view of FIG. 10C provides one example of an attachment feature 1018A that has a curved shape. The attachment feature 1018A comprises a first surface 1050A and a second surface 1050B generally opposite to the first surface 1050A. The surfaces 1050A, 1050B are both curved. Surfaces 1050C, 1050D may act as side surfaces in some embodiments, and these surfaces 1050C, 1050D may be flat in shape. The attachment feature 1018A may generally be hollow in shape and may define an internal cavity 1052 inside of the surfaces 1050A, 1050B, 1050C, 1050D. A protective housing may also be provided with an extended portion having a curved shape, with this extended portion also defining holes therein. The attachment feature 1018A may be configured to allow the curved extended portion of the protective housing to extend into the internal cavity 1052. The position and vertical tilt angle of the display may be adjusted by changing the position of the curved extended portion within the internal cavity 1052. Holes 1054 may be positioned on the surface 1050C and/or the surface 1050D. Once the extended portion of the protective housing is positioned at the desired location, a fastener may be extended through a respective hole 1054 of the attachment feature 1018A and a respective hole of the extended portion to maintain the display in this position.

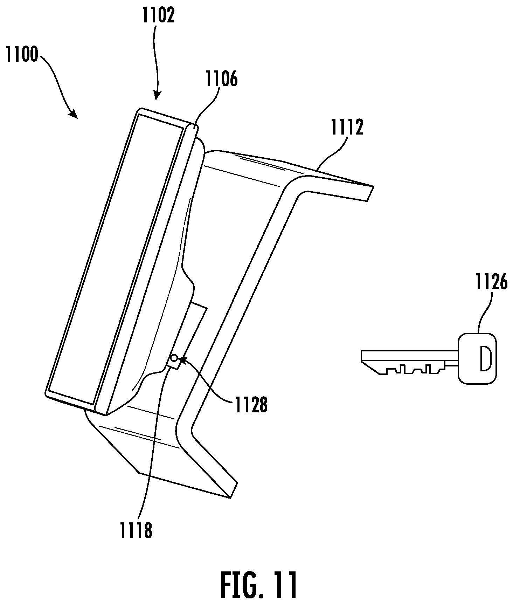

In some embodiments, a display may be configured to be locked in place relative to a dash, and the display is configured to be unlocked by using a physical key or digital signal. The inclusion of a lock may be beneficial to help mitigate the risk of the display being stolen. FIG. 11 illustrates an example of this, with FIG. 11 providing a perspective view of an example display system 1100. This display system 1100 comprises an attachment feature 1118 and a display 1102 having a protective housing 1106. The attachment feature 1118 is attached to the dash 1112 and the protective housing 1106 of the display. Additionally, a lock 1128 is positioned on the attachment feature 1118, and this lock 1128 may be configured to lock the display 1102 in place relative to the dash 1112 when the lock 1128 is in a locked state. In an unlocked state, the lock 1128 may be configured to enable the display 1102 to be moved away from the dash 1112 so that maintenance may be more easily performed on the display 1102 or other components, so that the display 1102 may be replaced, etc. A key 1126 may be used to move the lock 1128 between a locked state and an unlocked state. While the key 1126 is a physical key (e.g., an Allen key) in FIG. 11, a digital signal may be sent to cause the lock 1128 to move to an unlocked state or a locked state in other embodiments. However, the lock 1128 may shift between an unlocked state and a locked state in other ways. When the display 402 is secured or locked in place, vibration may be prevented and the freedom of movement for components within the display system 400 may be restricted.

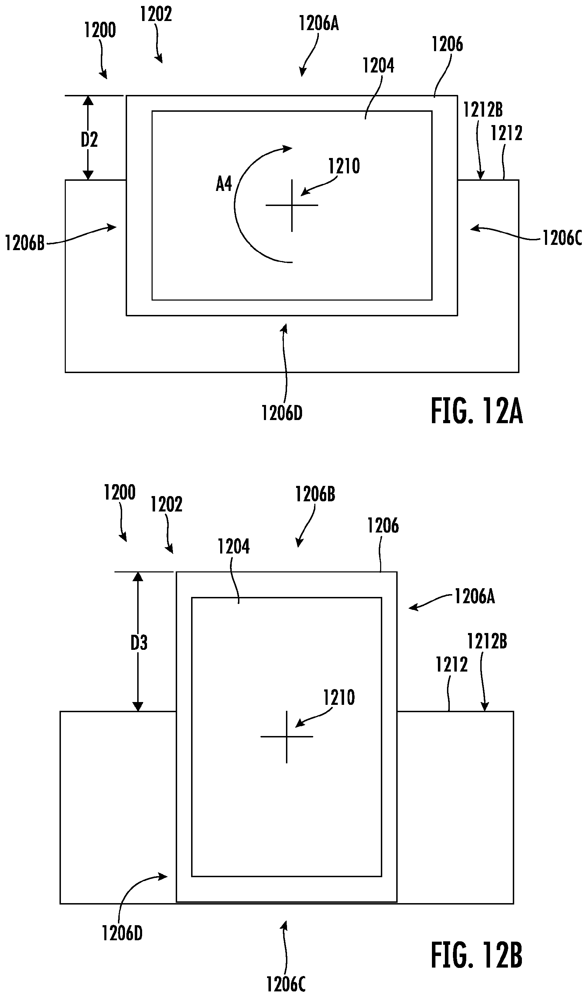

In some embodiments, the display may be rotatable so that the display may be oriented in either a horizontal or vertical orientation, and FIGS. 12A-12B illustrate examples of this. FIG. 12A is a front view illustrating an example display system 1200 where the display 1202 is in a horizontal orientation, and FIG. 12B is a front view illustrating the display system 1200 of FIG. 12A where the display 1202 is in a vertical orientation.

In both FIGS. 12A and 12B, a display 1202 is presented with a screen 1204 and a protective housing 1206. The display 1202 is attached to the dash 1212 using an attachment feature, which is not visible from the perspective illustrated in FIGS. 12A and 12B. Similar to other displays described herein, the protective housing 1206 comprises a first side 1206A, a second side 1206B, a third side 1206C, and a fourth side 1206D. In the horizontal orientation of FIG. 12A, the first side 1206A is the uppermost side, the second side 1206B is a first lateral side, the third side 1206C is a second lateral side opposite the second side 1206B, and the fourth side 1206D is the bottom side. However, the relative positioning of the sides 1206A-1206D may be adjusted. For example, in the vertical orientation of FIG. 12B, the first side 1206A and the fourth side 1206D are opposing lateral sides, the second side 1206B is the uppermost side, and the third side 1206C is the bottom side opposite the second side 1206B. The protective housing 1206 also comprises a center 1210, with this center 1210 being centered between sides 1206A, 1206D and with this center 1210 being centered between sides 1206B, 1206C.

The attachment feature may be configured to allow the display to be rotated so that the display may be presented in a vertical orientation and a horizontal orientation. Rotation of the attachment feature may occur (e.g., as indicated by the arrow A4) while the attachment feature remains attached to both the display 1202 and the dash 1212. The attachment feature may be configured to allow at least about ninety degrees of rotation for the display 1202 relative to the dash 1212 of the watercraft, with the rotation being about an axis extending into and out of the page and with the rotation occurring about the center 1210 of the display 1202. Rotation of the display 1202 relative to the dash 1212 may result in at least one of the second side 1206B or the third side 1206C becoming an uppermost side of the protective housing 1206. For example, in FIG. 12A, the display 1202 is illustrated in a horizontal orientation, with the longest dimension of the display 1202 (the dimension extending from the second side 1206B to the third side 1206C) extending horizontally. In FIG. 12A, the display is illustrated in a vertical orientation, with the longest dimension of the display 1202 extending vertically and with the second side 1206B becoming the uppermost side of the protective housing 1206.

Regardless of the orientation used for the display 1202, the uppermost side of the protective housing 1206 is positioned above the top surface 1212B of the dash 1212 by some distance. For example, when the display 1202 is in the horizontal orientation illustrated in FIG. 12A, side 1206A is positioned as the uppermost side of the protective housing 1206, and the side 1206A extends a distance D2 above the top surface 1212B of the dash 1212. When the display 1202 is in the vertical orientation illustrated in FIG. 12B, side 1206B is positioned as the uppermost side of the protective housing 1206, and the side 1206B extends a distance D3 above the top surface 1212B of the dash 1212. The distance D3 when the display 1202 is in the vertical orientation may be greater than the distance D2 when the display 1202 is in the horizontal orientation. However, in other embodiments, the uppermost side of the protective housing 1206 may not be positioned above the top surface 1212B of the dash 1212. In some embodiments, the distance D2 may be greater than zero, about 12.5 millimeters or more, about 25 millimeters or more, about 37.5 millimeters or more, about 50 millimeters or more, about 62.5 millimeters or more, about 75 millimeters or more, or some other value. Similarly, the distance D3 may be greater than zero, about 12.5 millimeters or more, about 25 millimeters or more, about 37.5 millimeters or more, about 50 millimeters or more, about 62.5 millimeters or more, about 75 millimeters or more, or some other value.

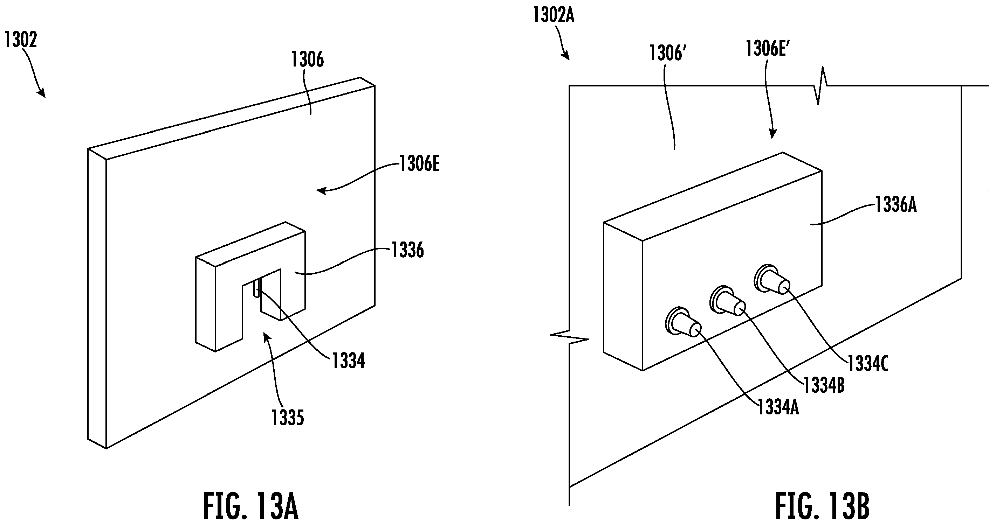

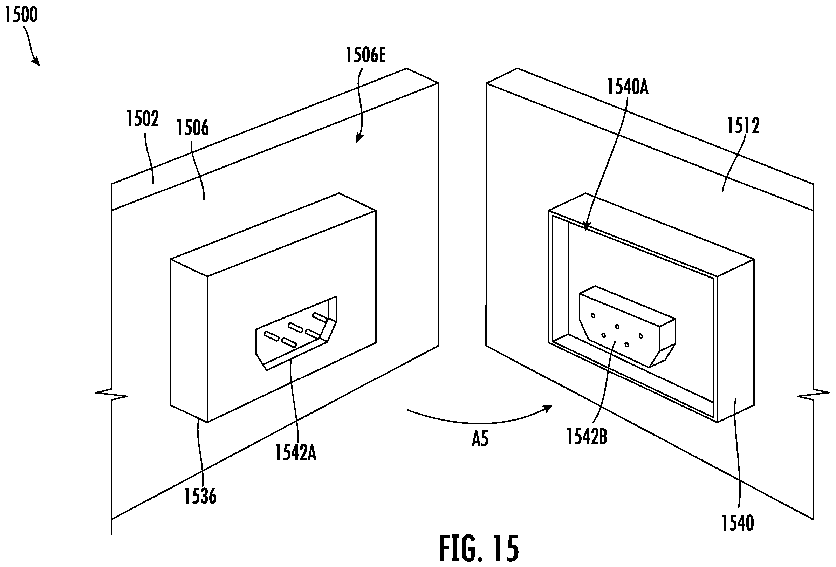

FIG. 13A is a rear perspective view illustrating an example display 1302 with a vertically extending connector. The display comprises a protective housing 1306 and a screen (not shown). The protective housing 1306 comprises various sides including a side 1306E, which is a rear side of the display 1302 in FIG. 13A. An attachment feature 1336 is integral to the protective housing 1306. A connector 1334 is attached to the attachment feature 1336, and the connector 1334 may be configured to engage with a connector of another cable extending to the connector 1334, with the cable generally extending vertically proximate to the point of engagement for the two connectors. However, the connector 1334 may be configured to engage with a connector of another cable extending to the connector 1334 in other ways, such as horizontally proximate to the point of engagement for the two connectors (*see, e.g.,* FIG. 15). In the illustrated embodiment, the connector 1334 is a male connector, but the connector may be a female connector in other embodiments. The attachment feature 1336 comprises a recessed region 1335 that the connector 1334 may extend into, allowing the connector 1334 to remain fully within the general rectangular prism shape of the attachment feature 1336. Thus, the risk of damage to the connector 1334 may be reduced as the risk of inadvertent contact with the connector 1334 may be reduced, with other portions of the attachment feature 1336 likely being contacted before the connector 1334. Connectors may be provided in the form of a pogo-pin in some embodiments. In FIG. 13A, the display 1302 is configured to be attached to other components within a dash using only one connector 1334. This single connector 1334 may be attached to another connector associated with components within the dash to simplify the mounting process.

FIG. 13B is a rear perspective view illustrating an example display with a connector hub having multiple horizontally extending connectors. The display 1302A comprises a protective housing 1306' and a screen (not shown). The protective housing 1306' comprises various sides including a side 1306E', which is a rear side of the display 1302A in FIG. 13B. An attachment feature 1336A is integral to the protective housing 1306'. The attachment feature 1336A may act as a connector hub, with a plurality of connectors positioned at the attachment feature 1336A. For example, the attachment feature 1336A comprises a first connector 1334A, a second connector 1334B, and a third connector 1334C. Each of the connectors 1334A-1334C may be configured to engage with a connector of another respective cable extending to the connectors 1334A-1334C, with the cable generally extending horizontally proximate to the point of engagement for the two connectors. However, the connectors 1334A-1334C may be configured to engage with a connector of another cable in other ways, such as through vertically extending connectors. In the illustrated embodiment, the connectors 1334A-1334C are a male connectors, but the connectors 1334A-1334C may be female connectors in other embodiments.

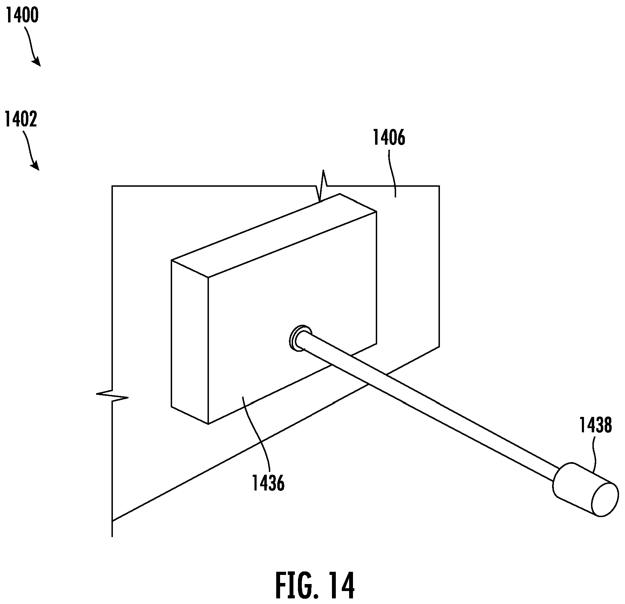

FIG. 14 is a rear perspective view illustrating a display system 1400 with cables 1438 (e.g., flying lead cables) extending from the display 1402. Like the embodiment illustrated in FIG. 13A, the attachment feature 1436 is integral to the protective housing 1406 in FIG. 14. The cables 1438 may extend out from inside the attachment feature 1436 so that the cables 1438 may be connected to another connector located inside of a dash. While the attachment feature 1436 is part of the protective housing 1406 in FIG. 14, in other embodiments, a protective housing may not have an attachment feature that is an integral part of the protective housing, and cables may extend out of the protective housing at another location so that the cables may be connected to another connector located inside of a dash. In FIG. 14, the display 1402 is configured to be attached to other components within a dash using only one connector 1438. This single connector 1438 may be attached to another connector associated with components within the dash to simplify the mounting process.

Another embodiment for an example display system 1500 is illustrated in FIG. 15 with a male connector 1542B on the dash 1512 and with a female connector 1542A on the display 1502. The example display system 1500 comprises a display 1502, with this display 1502 comprising a protective housing 1506 that has an attachment feature 1536 that forms an integral part of the protective housing 1506. The attachment feature 1536 is positioned at a side 1506E of the protective housing 1506, with the side 1506E being a rear side in the illustrated example. An extended perimeter wall 1540 extends out from a surface of the dash 1512, with a recess 1540A being positioned within the extended perimeter wall 1540. To attach the display 1502 to the dash 1512, the display 1502 may be moved towards the dash 1512 as indicated by the line A5. The attachment feature 1536 may be positioned inside of the extended perimeter wall 1540 to ensure appropriate alignment of the connectors 1542A, 1542B and other components. However, other alignment features may extend from the protective housing 1506 or the dash 1512. The display 1502 may then continue to be moved towards the dash 1512 so that the attachment may be completed. The attachment may be completed using fasteners, a snap fit engagement, a push fit engagement, a rotatable lock (e.g., a cam lock), etc. However, other attachment approaches may also be used. In FIG. 15, the connector 1542A is a female connector and connector 1542B is a male connector. However, in other embodiments, the connector 1542B may be a female connector and the connector 1542A may be a male connector. In FIG. 15, the display 1502 is configured to be attached to other components within a dash using only one connector 1542A. This single connector 1542A may be attached to another connector 1542B associated with components within the dash to simplify the mounting process.

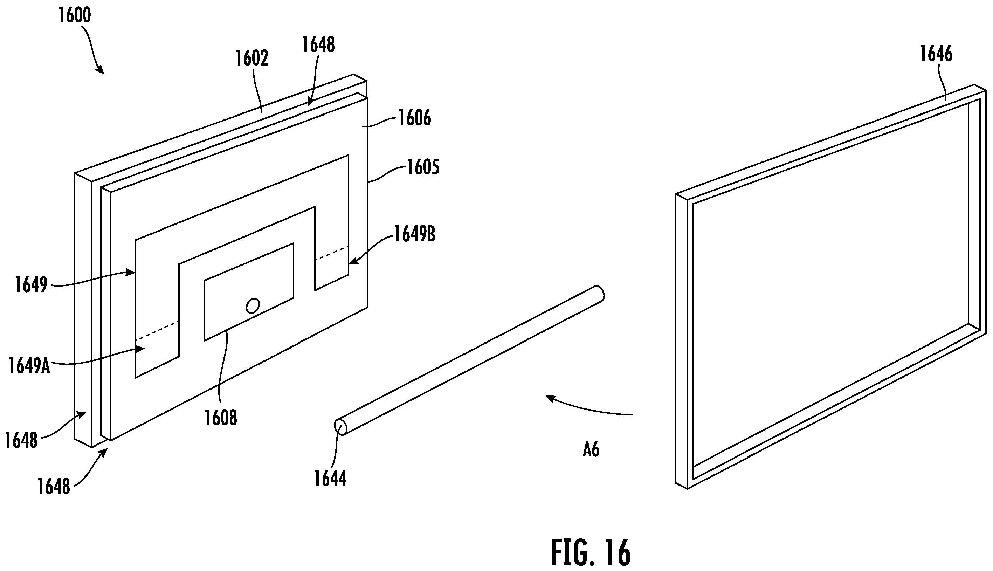

FIG. 16 is a perspective view illustrating an example display system 1600 with one or more light rails 1644 and a bezel 1646. The display system 1600 comprises a display 1602 having a protective housing 1606 with an extended portion 1608. The display system 1600 may also comprise an attachment feature (not shown). A central portion 1605 of the protective housing 1606 has a greater thickness than other portions of the protective housing 1606 positioned proximate to the recessed areas 1648. The recessed areas 1648 are located at positions extending around the perimeter of the protective housing 1606. The recessed areas 1648 provide room to allow the bezel 1646 to be attached to the protective housing 1606.

A bezel 1646 may be provided to help protect the edges of glass and to provide a more aesthetically pleasing border for a display 1602. A bezel 1646 may make it more comfortable for a user to rest a hand on the edge of the display 1602. The bezel 1646 may include an indented portion having a different thickness relative to other portions of the bezel 1646, and logo information or brand information may be presented on the indented portion of the bezel 1646. The bezel 1646 provides users with an increased ability to customize the appearance of the display system 1600. The bezel 1646 could also help facilitate the addition of other functionality and help integrate it in an aesthetically pleasing manner (e.g., light rails 1644). However, in some embodiments, glass-to-edge displays may be utilized that do not include a bezel 1646. Alternatively, in some embodiments, a protective housing may effectively provide a bezel, with the protective housing extending to cover the edges of glass on the display. Bezel 1646 is provided as one integral piece, but bezels may be provided that comprise multiple sections that are attached together to form a bezel similar to bezel 1646.

Light rail(s) 1644 may also be attached to the display 1602. The light rail(s) 1644 may be positioned between the protective housing 1606 and the bezel 1646. The display system 1600 may be assembled by positioning the light rail(s) 1644 proximate to recessed areas 1648 of the protective housing 1606, by moving the bezel 1646 along the direction A6 towards the display 1602 so that the bezel 1646 approaches a back side of the display 1602, and then by attaching the bezel 1646 to the protective housing 1606 with the light rail(s) 1644 positioned between the protective housing 1606 and the bezel 1646. The light rails(s) 1644 may be configured to provide red, green, blue, and white light in some embodiments, but the light rail(s) 1644 may be configured to provide light having other colors in other embodiments. The light rail(s) 1644 may be beneficial to allow users to customize the appearance of the display to their liking or to provide different alerts (e.g., red for a warning, green for all clear, flashing red for severe issue, etc.). In addition or as an alternative to the light rail(s) 1644, one or more speakers may be positioned proximate to recessed areas 1648 so that improved speaker systems may be provided with speakers projecting sound from additional or different locations. Power may be provided to the light rail(s) 1644, the speakers, or other components from the display or from a cable extending from inside the dash.

Additionally, in some embodiments, one or more fluid channels 1649 may extend through the display 1602, and a heat exchange fluid may be allowed to flow through the fluid channel(s) 1649. The heat exchange fluid may be water, cold air, or some other fluid. The fluid channel(s) 1649 may help form part of a heat exchanger with other warmer portions of the display 1602, thereby reducing the temperature of the display 1602. One challenge with displays on watercraft is that the displays often are in warm environments and may receive direct sunlight, making these displays heat more than other indoor displays. Additionally, displays may get heated to high temperatures when computing demands at the displays are high. By adding fluid channels to display 1602, the heat within the display 1602 may be better managed, and this may allow displays having different designs to be made possible. For example, display designs that were previously unsustainable due to poor heat conditions may now be viable design options. In some embodiments, it may not be necessary to use fluid channel(s) 1649 for cooling, but a cooling inlet 1649A and a cooling outlet 1649B may be positioned on the protective housing 1606 to allow use of the fluid channel(s) 1649. Where fluid channel(s) 1649 are used, fluid lines may extend from the fluid channel(s) 1649 into the dash similar to how cables 424 may extend from within the dash 412 to the display 402.

Other accessories may also be added to a display system. For example, a sun cover may be used to cover a screen and/or other portions of a display system. The sun cover may be made of a flexible material or may have flexible joints to allow flexing of the sun cover. The sun cover may comprise rigid plastic material that may be magnetized and/or foldable. Alternatively, the sun cover may be made out of a fabric that wraps around the units. The sun cover may be positioned in a space between the display and the dash when the sun cover is not in use, and the sun cover may be flipped over to cover the screen of the display at other times. In some embodiments, the sun cover may be retractable within the protective housing when not in use and may be extended out like window blinds when in use.

A cable retention element may also be used to help restrain cables so that they do not fall back behind a dash. The cable retention element may be a strain relief element, a clamp, or some other element configured to hold a cable in place.

Human machine interfaces (HMI) may also be used to allow interaction between users and the computer processing systems in the display systems. HMIs may allow interaction through touch, buttons, presence detection, voice, etc. However, in existing displays for watercraft, there is not always space on dashes to install HMIs. Additionally, the inclusion of HMIs tends to create additional clutter around the dash and the display. HMIs may allow for the removal of physical buttons on display systems, allowing display systems to be provided with an improved aesthetic appearance. In some embodiments, the displays may be touch displays, and HMIs and any user interfaces may be implemented in the form of the touch displays.

HMIs may be incorporated in various display systems described herein. An additive HMI device may be utilized that is configured to attach to the display in either a portrait orientation or a landscape orientation. The HMIs might clamp on around a display, a bezel of a display, or attach to a bracket mounted to the display or bezel. Power for an HMI may be provided via batteries and be transferred to the HMI using wired connections or wirelessly. Additionally, data transfer to the HMI could be done using wired connections or wirelessly.

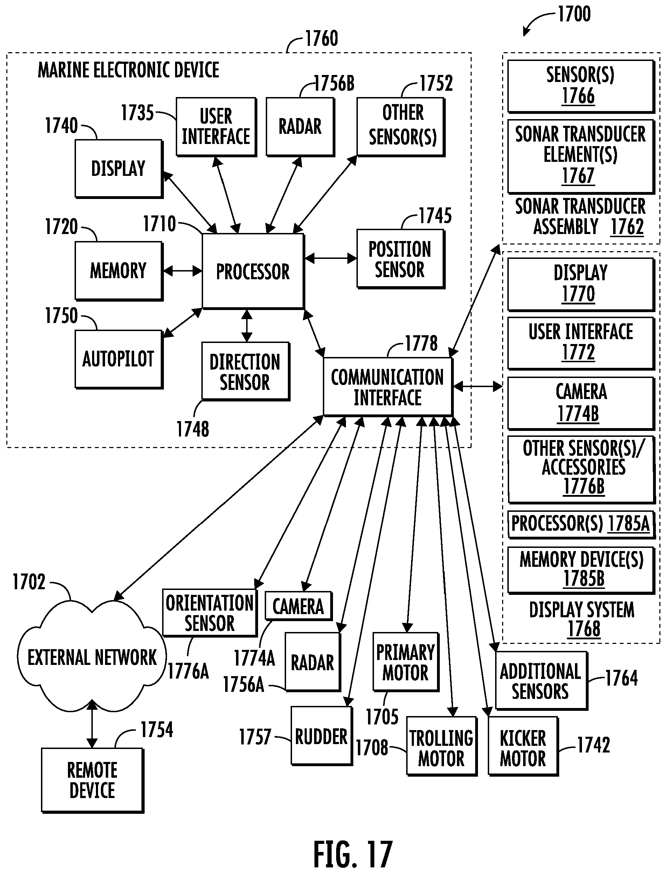

The watercraft and other systems described herein may comprise various electrical components, and FIG. 17 is a block diagram illustrating electrical components that may be provided on in one example system 1700.

The system 1700 includes a display system 1768. The display system 1768 comprises a display 1770, with the display 1770 having a screen. In some embodiments, the display 1770 may be a touch display that is configured to receive input from a user by detecting the user touching the display 1770 with a finger. A user interface 1772 is also provided in the display system 1768, and the user interface 1772 may include one or more input buttons, a speaker, a microphone, a keypad, and other mechanisms to enable the user to input commands. However, in some embodiments, a user interface may be provided simply in the form of a touch-screen display 1770. The display system 1768 may also comprise a camera 1774B to obtain one or more images, which may be live images. Alternatively, another camera (e.g., camera 1774A) and an associated orientation sensor may be positioned at another location on the watercraft, with the orientation sensor being configured to determine the orientation at the camera. Cameras 1774A, 1774B may be video cameras in some embodiments.

The display system 1768 may also comprise other sensors and/or accessories 1776B. These may include an orientation sensor. The orientation sensor may be configured to determine the orientation of the display 1770 or an orientation at the camera 1774B. Other accessories that may be provided in display systems may include microphones for voice interaction, speakers, Wi-Fi antennas that may be of a higher quality, radio technology such as ultra-wideband (UWB) radio technology, proximity sensors, secure digital (SD) cards, global positioning systems (GPS), etc. In some embodiments, accessories may all be included in a display system initially. However, in other embodiments, customers may pick and choose the accessories that they wish to have. Allowing more customization for users may minimize the overall cost of making the display system and minimize the cost for the user as the display system will not include accessories that are unwanted by the user. By not including unwanted accessories, more space may be freed up between the display and the dash, within the dash, and around the display in general.

In some embodiments, the display 1770 may be driven by the marine electronic device 1760, another multi-functional display (MFD), or one or more processors 1710 within the marine electronic device 1760. However, in the embodiment illustrated in FIG. 17, the display 1770 is instead driven by its own processor(s) 1785A and memory device(s) 1785B.

The system 1700 may comprise numerous marine devices. As shown in FIG. 17, a sonar transducer assembly 1762, a radar 1756A, a rudder 1757, a primary motor 1705, a trolling motor 1708, and additional sensors/devices 1764 may be provided as marine devices, but other marine devices may also be provided. One or more marine devices may be implemented on the marine electronic device 1760 as well. For example, a position sensor 1745, a direction sensor 1748, an autopilot 1750, and other sensors/devices 1752 may be provided within the marine electronic device 1760. These marine devices can be integrated within the marine electronic device 1760, integrated on a watercraft at another location and connected to the marine electronic device 1760, and/or the marine devices may be implemented at a remote device 1754 in some embodiments. The system 1700 may include any number of different systems, modules, or components, each of which may comprise any device or means embodied in either hardware, software, or a combination of hardware and software configured to perform one or more corresponding functions described herein.

The marine electronic device 1760 may include at least one processor 1710, memory device(s) 1720, a communications interface 1778, a user interface 1735, a display 1740, an autopilot 1750, and one or more sensors (e.g. position sensor 1745, direction sensor 1748, other sensors/devices 1752). One or more of the components of the marine electronic device 1760 may be located within a housing or could be separated into multiple different housings (e.g., be remotely located).

The processor(s) 1710, 1785A may be any means configured to execute various programmed operations or instructions stored in memory device(s) (e.g., memory 1720) such as a device or circuitry operating in accordance with software or otherwise embodied in hardware or a combination of hardware and software (e.g. a processor operating under software control or the processor embodied as an application specific integrated circuit (ASIC) or field programmable gate array (FPGA) specifically configured to perform the operations described herein, or a combination thereof) thereby configuring the device or circuitry to perform the corresponding functions of the processor(s) 1710, 1785A as described herein.

In an example embodiment, the memory device(s) 1720, 1785B may include one or more non-transitory storage or memory devices such as, for example, volatile and/or non-volatile memory that may be either fixed or removable. The memory device(s) 1720, 1785B may be configured to store instructions, computer program code, radar data, and additional data such as sonar data, chart data, location/position data in a non-transitory computer readable medium for use, such as by the processor(s) 1710, 1785A for enabling the marine electronic device 1760, the display system 1768, or another device to carry out various functions in accordance with example embodiments of the present invention. For example, the memory device(s) 1720, 1785B could be configured to buffer input data for processing by the processor(s) 1710, 1785A. Additionally or alternatively, the memory device(s) 1720, 1785B could be configured to store instructions for execution by the processor(s) 1710, 1785A. The memory device(s) 1720, 1785B may include computer program code that is configured to, when executed, cause the processor(s) 1710, 1785A to perform various methods described herein. The memory device(s) 1720, 1785B may serve as a non-transitory computer readable medium having stored thereon software instructions that, when executed by a processor, cause methods described herein to be performed.

The communications interface 1778 may be configured to enable communication to external systems (e.g. an external network 1702). In this manner, the marine electronic device 1760 may retrieve stored data from a remote device 1754 via the external network 1702 in addition to or as an alternative to the onboard memory device(s) 1720. Additionally or alternatively, the marine electronic device 1760 may transmit or receive data, such as radar signal data, radar return data, radar image data, path data or the like to or from a sonar transducer assembly 1762. In some embodiments, the marine electronic device 1760 may also be configured to communicate with other devices or systems (such as through the external network 1702 or through other communication networks, such as described herein). For example, the marine electronic device 1760 may communicate with a propulsion system of the watercraft 100 (e.g., for autopilot control); a remote device (e.g., a user's mobile device, a handheld remote, etc.); or another system.

The communications interface 1778 of the marine electronic device 1760 may also include one or more communications modules configured to communicate with one another in any of a number of different manners including, for example, via a network. In this regard, the communications interface 1778 may include any of a number of different communication backbones or frameworks including, for example, Ethernet, the NMEA 2000 framework, GPS, cellular, Wi-Fi, or other suitable networks. The network may also support other data sources, including GPS, autopilot, engine data, compass, radar, etc. In this regard, numerous other peripheral devices (including other marine electronic devices or transducer assemblies) may be included in the system 1700. In some embodiments, the display system 1768 may have similar a communications interface similar to communications interface 1778.

The position sensor 1745 may be configured to determine the current position and/or location of the marine electronic device 1760 (and/or the watercraft 100). For example, the position sensor 1745 may comprise a GPS, bottom contour, inertial navigation system, such as machined electromagnetic sensor (MEMS), a ring laser gyroscope, or other location detection system. Alternatively or in addition to determining the location of the marine electronic device 1760 or the watercraft 100, the position sensor 1745 may also be configured to determine the position and/or orientation of an object outside of the watercraft 100. In some embodiments, the display system 1768 may have similar a position sensor similar to position sensor 1745.

The displays 1740, 1770 (e.g. one or more screens) may be configured to present images and may include or otherwise be in communication with user interfaces 1735, 1772 configured to receive input from a user. The displays 1740, 1770 may be, for example, a conventional LCD (liquid crystal display), a touch screen display, mobile device, or any other suitable display known in the art upon which images may be displayed.

In some embodiments, the displays 1740, 1770 may present one or more sets of data (or images generated from the one or more sets of data). Such data includes chart data, radar data, sonar data, weather data, location data, position data, orientation data, sonar data, or any other type of information relevant to the watercraft. Radar data may be received from radar 1756A located outside of a marine electronic device 1760, radar 1756B located in a marine electronic device 1760, or from radar devices positioned at other locations, such as remote from the watercraft. Additional data may be received from marine devices such as a sonar transducer assembly 1762, a primary motor 1705 or an associated sensor, a trolling motor 1708 or an associated sensor, an autopilot 1750, a rudder 1757 or an associated sensor, a position sensor 1745, a direction sensor 1748, other sensors/devices 1752, a remote device 1754, onboard memory device(s) 1720 (e.g., stored chart data, historical data, etc.), or other devices.

The user interfaces 1735, 1772 may include, for example, a keyboard, keypad, function keys, buttons, a mouse, a scrolling device, input/output ports, a touch screen, or any other mechanism by which a user may interface with the system.

Although the display 1740 of FIG. 17 is shown as being directly connected to the processor(s) 1710 and within the marine electronic device 1760, the display 1740 could alternatively be remote from the processor(s) 1710 and/or marine electronic device 1760. Likewise, in some embodiments, the position sensor 1745 and/or user interface 1735 could be remote from the marine electronic device 1760.

The marine electronic device 1760 and the display system 1768 may include one or more other sensors/devices 1752 and other sensor(s)/accessories 1776B, such as configured to measure or sense various other conditions. The other sensors/devices 1752 and other sensor(s)/accessories 1776B may include, for example, an air temperature sensor, a water temperature sensor, a current sensor, a light sensor, a wind sensor, a speed sensor, or the like.

A sonar transducer assembly 1762 is also provided in the system 1700. The sonar transducer assembly 1762 illustrated in FIG. 17 may include one or more sonar transducer elements 1767, such as may be arranged to operate alone or in one or more transducer arrays. In some embodiments, additional separate sonar transducer elements (arranged to operate alone, in an array, or otherwise) may be included. As indicated herein, the sonar transducer assembly 1762 may also include a sonar signal processor or other processor (although not shown) configured to perform various sonar processing. In some embodiments, the processor (e.g., processor(s) 1710 in the marine electronic device 1760, a controller (or processor portion) in the sonar transducer assembly 1762, or a remote controller-or combinations thereof) may be configured to filter sonar return data and/or selectively control sonar transducer element(s) 1767. For example, various processing devices (e.g., a multiplexer, a spectrum analyzer, A-to-D converter, etc.) may be utilized in controlling or filtering sonar return data and/or transmission of sonar signals from the sonar transducer element(s) 1767. The processor(s) 1710 may also be configured to filter data regarding certain objects out of map data.

The sonar transducer assembly 1762 may also include one or more other systems, such as various sensor(s) 1766. For example, the sonar transducer assembly 1762 may include an orientation sensor, such as gyroscope or other orientation sensor (e.g., accelerometer, MEMS, etc.) that can be configured to determine the relative orientation of the sonar transducer assembly 1762 and/or the one or more sonar transducer element(s) 1767-such as with respect to a forward direction of the watercraft. In some embodiments, additionally or alternatively, other types of sensor(s) are contemplated, such as, for example, a water temperature sensor, a current sensor, a light sensor, a wind sensor, a speed sensor, or the like. While only one sonar transducer assembly 1762 is illustrated in FIG. 17, additional sonar transducer assemblies may be provided in other embodiments.

The components presented in FIG. 17 may be rearranged to alter the connections between components. For example, in some embodiments, a marine device outside of the marine electronic device 1760, such as the radar 1756A, may be directly connected to the processor(s) 1710 rather than being connected to the communications interface 1778. Additionally, sensors and devices implemented within the marine electronic device 1760 may be directly connected to the communications interface in some embodiments rather than being directly connected to the processor(s) 1710.

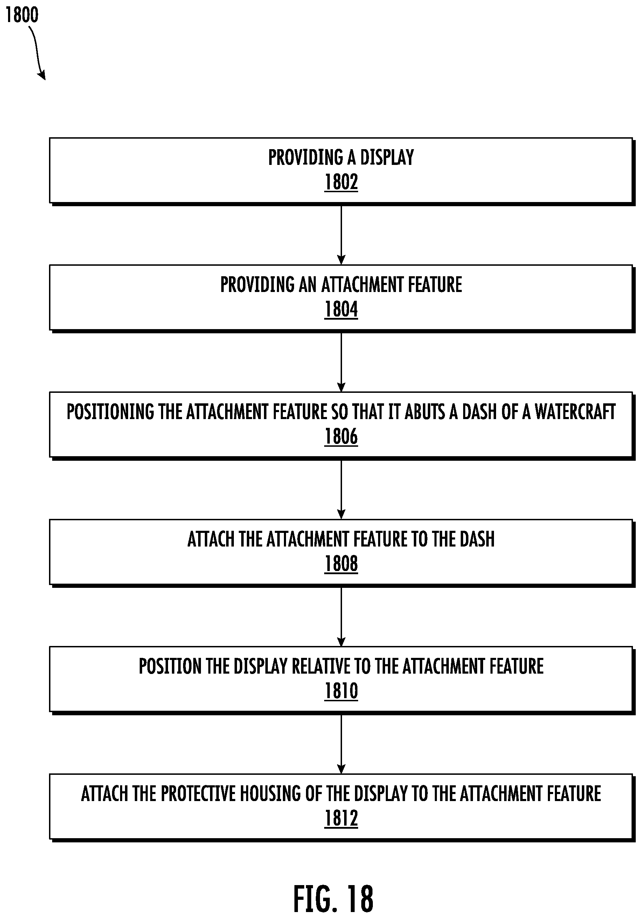

FIG. 18 is a flow chart illustrating an example method 1800 for assembling a display to a dash of a watercraft. At operation 1802, a display is provided. The display may comprise a screen having a front face and a protective housing with a various sides. These sides may include a bottom side, a top side, and a rear side-however, the relative positioning of these sides may be changed if the display is rotated to an alternative orientation. The screen may be attached to the protective housing so that the rear side is positioned opposite the front face of the screen. At operation 1804, an attachment feature is provided. At operation 1806, the attachment feature is positioned so that it abuts a dash of the watercraft. At operation 1808, the attachment feature is attached to the dash. At operation 1810, the display is positioned relative to the attachment feature. Positioning of the display at operation 1810 may occur after attaching the attachment feature to the dash at operation 1808. The display may be positioned relative to the attachment feature so that the attachment feature is positioned in a location proximate to the rear side of the protective housing. The location where the attachment feature is positioned may be centered along a width of the protective housing and may be more proximate to the bottom side of the protective housing than the top side of the protective housing. At operation 1812, the protective housing of the display is attached to the attachment feature. Operation 1812 may be performed after the display is positioned relative to the attachment feature at operation 1810.

The method 1800 is merely exemplary, and the operations of method 1800 may be adjusted in other embodiments. For example, additional operations may be added to the method, or some of the listed operations may be omitted. Additionally or alternatively, operations may be performed in a different order or certain operations may be performed simultaneously.

According to an aspect of the invention, there is provided a display system for use in a watercraft, the display system comprising: a display comprising: a screen having a front face; and a protective housing comprising a first side, a second side, a third side opposite the second side, a fourth side opposite the first side, and a rear side, wherein the screen is attached to the protective housing so that the rear side is positioned opposite the front face of the screen; and an attachment feature positioned proximate to the rear side of the protective housing, the attachment feature being at least partially hollow and defining an internal cavity, wherein the attachment feature is configured to attach the protective housing to a dash of the watercraft, wherein the attachment feature is configured to receive one or more cables within the internal cavity, and wherein the attachment feature is configured to be attached to the dash before being attached to the protective housing.

The rear side of the protective housing may be separated from the dash by a distance of more than about a centimeter when the rear side of the protective housing extends parallel to a portion of the dash proximate to an attachment point where the attachment feature is attached to the dash.

The display may be configured to move between a first orientation and a second orientation, wherein the first side is the uppermost side in the first orientation, wherein the attachment feature is configured to enable the display to be rotated at least about ninety degrees relative to the dash of the watercraft as the display rotates from the first orientation to the second orientation, and wherein rotation of the display results in the second side becoming an uppermost side of the protective housing.

According to another aspect of the invention, there is provided a display system for use in a watercraft, the display system comprising: a display comprising: a screen having a front face; and a protective housing comprising a first side, a second side, a third side opposite the second side, a fourth side opposite the first side, and a rear side, wherein the screen is attached to the protective housing so that the rear side is positioned opposite the front face of the screen; and an attachment feature positioned proximate to the rear side of the protective housing, the attachment feature being configured to attach the protective housing to a dash of the watercraft, the attachment feature being positioned at a location about halfway between the second side and the third side, and the location being about halfway between the first side and the fourth side, wherein the display is configured to move between a first orientation and a second orientation, wherein the first side is the uppermost side in the first orientation, wherein the attachment feature is configured to enable the display to be rotated at least about ninety degrees relative to the dash of the watercraft as the display rotates from the first orientation to the second orientation, and rotation of the display results in the second side becoming an uppermost side of the protective housing.

The protective housing may be configured to be attached to the dash without any attachments at the first side, the second side, the third side, or the fourth side of the protective housing.

An uppermost side of the protective housing may extend above a top surface of the dash when the protective housing is attached to the dash using the attachment feature.

According to another aspect of the invention, there is provided a display system for use in a watercraft, the display system comprising: a display comprising: a screen having a front face; and a protective housing comprising a first side, a second side, a third side opposite the second side, a fourth side opposite the first side, and a rear side, wherein the screen is attached to the protective housing so that the rear side is positioned opposite the front face of the screen; and an attachment feature positioned proximate to the rear side of the protective housing, the attachment feature being configured to attach the protective housing to a dash of the watercraft, the attachment feature being configured to be attached at either a first location or a second location relative to the protective housing, wherein the first location is about halfway between the second side and the third side but is not centered between the first side and the fourth side of the protective housing, and wherein the second location is about halfway along a first side and the fourth side of the protective housing but is not centered along the second side and the third side of the protective housing, wherein the attachment feature is configured to enable the display to be presented in a horizontal orientation when the attachment feature is attached to the protective housing at the first location, wherein the first side is the uppermost side in the horizontal orientation, and wherein the attachment feature is configured to enable the display to be presented in a vertical orientation when the attachment feature is attached to the protective housing at the second location, and wherein the second side is uppermost side in the vertical orientation.

The protective housing may be configured to be attached to the dash without any attachments at the first side, the second side, the third side, or the fourth side of the protective housing.

### CONCLUSION

Many modifications and other embodiments set forth herein will come to mind to one skilled in the art to which these embodiments pertain having the benefit of the teachings presented in the foregoing descriptions and the associated drawings. Therefore, it is to be understood that the embodiments are not to be limited to the specific embodiments disclosed and that modifications and other embodiments are intended to be included within the scope of the invention. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the invention. In this regard, for example, different combinations of elements and/or functions than those explicitly described above are also contemplated within the scope of the invention. Although specific terms are employed herein, they are used in a generic and descriptive sense only and not for purposes of limitation.

## Claims

1. A display system for use in a watercraft, the display system comprising:
a display comprising:
a screen having a front face; and
a protective housing comprising a first side, a second side, a third side opposite the second side, a fourth side opposite the first side, and a rear side, wherein the screen is attached to the protective housing so that the rear side is positioned opposite the front face of the screen; and
an attachment feature positioned proximate to the rear side of the protective housing,
wherein the attachment feature is configured to attach the protective housing to a dash of the watercraft, the attachment feature is positioned at a location centered between the second side and the third side of the protective housing, and the location is more proximate to the fourth side than the first side.

2. The display system of claim 1, wherein the display is configured to move between a first orientation and a second orientation, wherein the first side is the uppermost side in the first orientation, wherein the attachment feature is configured to enable the display to be rotated at least about ninety degrees relative to the dash of the watercraft as the display rotates from the first orientation to the second orientation, and wherein rotation of the display results in the second side becoming an uppermost side of the protective housing.

3. The display system of claim 1, wherein the attachment feature is configured to enable the display to be tilted at different vertical tilt angles relative to the dash of the watercraft.

4. The display system of claim 1, wherein the protective housing is configured to be attached to the dash without any attachments at the first side, the second side, the third side, or the fourth side of the protective housing.

5. The display system of claim 1, wherein the attachment feature is configured to be attached to the dash before being attached to the protective housing.

6. The display system of claim 1, wherein the rear side of the protective housing is separated from the dash by a distance of more than about a centimeter when the rear side of the protective housing extends parallel to a portion of the dash proximate to an attachment point where the attachment feature is attached to the dash.

7. The display system of claim 1, wherein the display is configured to be locked in place relative to the dash, and the display is configured to be unlocked by using a physical key or digital signal.

8. The display system of claim 1, wherein an uppermost side of the protective housing extends above a top surface of the dash when the protective housing is attached to the dash using the attachment feature.

9. The display system of claim 1, wherein an extended portion is positioned on the rear side of the protective housing, the extended portion having an increased thickness relative to other portions of the protective housing, the extended portion surrounding a recessed portion, the recessed portion having a reduced thickness relative to the extended portion, and a seal is formed between the attachment feature and the extended portion.

10. The display system of claim 9, wherein a seal is formed between the attachment feature and the extended portion when the protective housing is attached to the dash.

11. The display system of claim 1, wherein the attachment feature is integral to the protective housing.

12. A method for assembling a display to a dash of a watercraft, the method comprising:
providing a display comprising a screen having a front face and a protective housing with a first side, a second side, a third side opposite the second side, a fourth side opposite the first side, and a rear side, the screen being attached to the protective housing so that the rear side is positioned opposite the front face of the screen;
providing an attachment feature;
positioning the attachment feature so that it abuts the dash of the watercraft;
attaching the attachment feature to the dash;
after attaching the attachment feature to the dash, positioning the display relative to the attachment feature so that the attachment feature is positioned in a location proximate to the rear side of the protective housing, wherein the location is about halfway between the second side and the third side and the location is more proximate to the fourth side than the first side; and
after positioning the display relative to the attachment feature, attaching the protective housing to the attachment feature with the attachment feature positioned proximate to the location.
